# EUROPEAN PATENT SPECIFICATION

(11) **EP 3 635 806 B1**
(45) Date of publication and mention of the grant of the patent: **06.10.2021**
(21) Application number: 18732553.5
(22) Date of filing: 29.05.2018
(51) Int. Cl.: H01M 4/86, H01M 4/88, H01M 4/92

(54) **ELECTRODE CATALYST-CONTAINING DISPERSION COMPOSITIONS AND ARTICLES THEREFROM**
ELEKTRODEKATALYSATOR ENTHALTENDE DISPERSIONSZUSAMMENSETZUNGEN UND ARTIKELN
COMPOSITIONS DE DISPERSION CONTENANT UN CATALYSEUR D'ÉLECTRODE ET ARTICLES À PARTIR DE CELLES-CI

(30) Priority: 05.06.2017 US 201762515029 P
(43) Date of publication of application: 15.04.2020
(73) Proprietor: 3M Innovative Properties Company, St. Paul, MN 55133-3427 (US)
(72) Inventor: HAUG, Andrew T., Saint Paul Minnesota 55133-3427 (US); ABULU, John E., Saint Paul Minnesota 55133-3427 (US); HESTER, Amy E., Saint Paul Minnesota 55133-3427 (US); STEINBACH, Andrew J.L., Saint Paul Minnesota 55133-3427 (US)
(74) Representative: Mathys & Squire
(86) International application number: PCT/US2018/034838
(87) International publication number: WO 2018/226444

(56) References cited:
- WO-A1-2016/100034
- US-A1- 2010 291 467
- US-A1- 2016 079 604

## Description

### TECHNICAL FIELD

An electrode catalyst-containing composition is disclosed along with methods of making such compositions. Electrodes comprising the catalyst-containing composition show high reversal tolerance.

### BACKGROUND

Electrochemical devices, including proton exchange membrane fuel cells, sensors, electrolyzers, chlor-alkali separation membranes, and the like, have been constructed from membrane electrode assemblies (MEAs). Such MEAs typically comprise an ion conducting membrane sandwiched between two electrodes, a cathode and an anode, to form a 3-layer MEA. The ion conducting membrane transports ions that are formed at one electrode to the other, allowing electronic current to flow in an external circuit connecting the electrodes.

Hydrogen/oxygen fuel cells are one type of electrochemical device, which generates electrical power when supplied with hydrogen and oxygen Hydrogen/oxygen fuel cells are typically formed by placing the 3-layer MEA between two porous, electrically conducting elements called gas diffusion layer (GDLs), to form a 5-layer MEA. A typical 5-layer MEA for use in a hydrogen/oxygen fuel cell might comprise a first GDL, a first electrode portion, an ion conducting membrane containing a proton-exchange electrolyte, a second electrode portion, and a second GDL. Such a five-layer MEA can be used to generate electricity by oxidization of hydrogen gas and reduction of oxygen gas.

### SUMMARY

In typical operation, fuel cells produce electrical power when supplied with a fuel such as hydrogen and an oxidant such as oxygen from air. This power can be created by setting the required electrical current and generating a cell voltage. When current is drawn in the absence of fuel, such as hydrogen, a condition known as cell reversal occurs, in which the anode cell potential may rise above a critical limit, causing permanent damage to the fuel cell. A variety of situations can cause a fuel cell to undergo cell reversal. Examples include: an unexpected shutdown of the input fuels (such as hydrogen); one or more cells within a fuel cell stack may become blocked by debris, liquid water, or ice, preventing fuel flow to the anode; and requesting current before fuel is supplied, or in the absence of fuel at the anode. U.S. Pat. No. 6,936,370 (Knights et al.) teaches the addition of iridium to platinum supported on carbon to improve reversal tolerance. U.S. Pat. No. 8,637,193 (Steinbach et al.) teaches the addition of iridium to platinum supported on a corrosion resistant support further improves reversal tolerance compared to iridium and platinum deposited on a carbon support. However, fuel cell performance is reduced when utilizing the corrosion resistant supported catalyst compared to the carbon supported catalyst. Thus, there is a desire to achieve reversal tolerance at or beyond the levels demonstrated in US8637193 without reducing performance.

US 2010/291467 discloses a catalyst composition for use in a fuel cell. The composition comprises a dispersed perylene red whisker substrate with a platinum loading.

In one aspect, a composition is described comprising:
(a) a plurality of acicular particles, wherein the acicular particles comprise a microstructured core with a layer of catalytic material on at least one portion of the surface of the microstructured core, wherein the microstructured core comprises at least one of a polynuclear aromatic hydrocarbon and heterocyclic compounds, and the catalytic material comprises (i) platinum and (ii) at least one of iridium and ruthenium;
(b) ionomer binder;
(c) solvent; and
(d) a plurality of carbon particles,
wherein the plurality of acicular particles is not oriented.

In another aspect, a composition is described comprising:
(a) a plurality of acicular particles comprising first and second pluralities of acicular particles, wherein the first plurality of acicular particles comprise a first microstructured core with a first layer of catalytic material on at least one portion of the surface of the first microstructured core, wherein the first layer of catalytic material comprises platinum; and wherein the second plurality of acicular particles comprise a second microstructured core with a second layer of catalytic material on at least one portion of the surface of the second microstructured core, wherein the second layer of catalytic material comprises at least one of iridium and ruthenium and wherein the first and second microstructured cores independently comprise at least one of a polynuclear aromatic hydrocarbon and heterocyclic compounds;
(b) ionomer binder;
(c) solvent; and
(d) a plurality of carbon particles,
wherein the plurality of acicular particles is not oriented.

In one embodiment, an article is provided. The article comprising:
a substrate with a coating thereon, the coating comprising (a) a plurality of acicular particles, wherein the acicular particles comprise a microstructured core with a layer of catalytic material on at least one portion of the surface of the microstructured core, wherein the microstructured core comprises at least one of a polynuclear aromatic hydrocarbon and heterocyclic compounds, and the catalytic material comprises (i) platinum and (ii) at least one of iridium and ruthenium

In one embodiment, an article is provided. The article comprising:
a substrate with a coating thereon, the coating comprising
   (a) a plurality of acicular particles comprising first and second pluralities of acicular particles, wherein the first plurality of acicular particles comprise a first microstructured core with a first layer of catalytic material on at least one portion of the surface of the first microstructured core, wherein the first layer of catalytic material comprises platinum; and wherein the second plurality of acicular particles comprise a second microstructured core with a second layer of catalytic material on at least one portion of the surface of the second microstructured core, wherein the second layer of catalytic material comprises at least one of iridium and ruthenium and wherein the first and second microstructured cores independently comprise at least one of a polynuclear aromatic hydrocarbon and heterocyclic compounds;
   (b) ionomer binder;
   (c) solvent; and
   (d) a plurality of carbon particles,
wherein the plurality of acicular particles is not oriented.

In yet another aspect, the compositions of the present disclosure are used in the generation of electricity.

The above summary is not intended to describe each embodiment. The details of one or more embodiments of the invention are also set forth in the description below. Other features, objects, and advantages will be apparent from the description and from the claims.

### BREIF DESCRIPTION OF DRAWINGS

Fig. 1 is a plot of cell output voltage versus percent hydrogen in the fuel for Comparative Examples A-C and Examples 1-2;
Fig. 2 is a plot of cell output voltage versus current density for Comparative Examples A-C and Examples 1-2;
Fig. 3 is a plot of cell output voltage versus amount of the cumulative time in seconds spent in reversal mode for Comparative Examples A-B and Examples 1, 2, 4-5, and 8; and
Fig. 4 is a plot of cell output voltage versus amount of the cumulative time in seconds spent in reversal mode for Comparative Example B and Examples 5-7.

### DETAILED DESCRIPTION

As used herein, the term
"and/or" is used to indicate one or both stated cases may occur, for example A and/or B includes, (A and B) and (A or B);
"highly fluorinated" refers to a compound wherein at least 75%, 80%, 85%, 90%, 95%, or even 99% of the C-H bonds are replaced by C-F bonds, and the remainder of the C-H bonds are selected from C-H bonds, C-Cl bonds, C-Br bonds, and combinations thereof;
"perfluorinated" means a group or a compound derived from a hydrocarbon wherein all hydrogen atoms have been replaced by fluorine atoms. A perfluorinated compound may however still contain other atoms than fluorine and carbon atoms, like oxygen atoms, chlorine atoms, bromine atoms and iodine atoms; and
"equivalent weight" (EW) of a polymer means the weight of polymer which will neutralize one equivalent of base;
"substituted" means, for a chemical species, substituted by conventional substituents which do not interfere with the desired product or process, e.g., substituents can be alkyl, alkoxy, aryl, phenyl, halo (F, Cl, Br, I), cyano, nitro, etc.;
"nanoscopic catalyst particle" means a particle of catalyst material having at least one dimension of about 10 nm or less or having a crystallite size of about 10 nm or less, measured as diffraction peak half widths in standard 2-theta x-ray diffraction scans; and
"discrete" refers to distinct elements, having a separate identity, but does not preclude elements from being in contact with one another.

Also herein, recitation of ranges by endpoints includes all numbers subsumed within that range (e.g., 1 to 10 includes 1.4, 1.9, 2.33, 5.75, 9.98, etc.).

Also herein, recitation of "at least one" includes all numbers of one and greater (e.g., at least 2, at least 4, at least 6, at least 8, at least 10, at least 25, at least 50, at least 100, etc.).

The present disclosure is directed toward electrode catalyst-containing dispersion compositions and articles made therefrom. Such electrode catalyst-containing dispersion compositions comprise a plurality of randomly oriented acicular particles, an ionomer binder, and a plurality of carbon particles. As used herein, "not oriented" refers to the acicular particles having a random orientation of their major axes with no observed pattern.

### Acicular Particles

The acicular particles disclosed herein are discrete elongated particles comprising a plurality of microstructured cores, wherein at least one portion of the surface of the microstructured core comprises a layer of catalytic material.

The microstructured core is an elongated particle comprising an organic compound which acts as a support for a catalytic material disposed thereon. Although elongated, the microstructured cores of the present disclosure are not necessarily linear in shape and may be bent, curled or curved at the ends of the structures or the structure itself may be bent, curled or curved along its entire length.

The microstructured core is made from an organic compound. The organic compounds include planar molecules comprising chains or rings over which π-electron density is extensively delocalized. Organic compounds that are suitable for use in this disclosure generally crystallize in a herringbone configuration. Preferred compounds include that those that can be broadly classified as polynuclear aromatic hydrocarbons and heterocyclic compounds. Polynuclear aromatic compounds are described in Morrison and Boyd, Organic Chemistry, Third Edition, Allyn and Bacon, Inc. (Boston: 1974), Chapter 30, and heterocyclic aromatic compounds are described in Morrison and Boyd, supra, Chapter 31. Among the classes of polynuclear aromatic hydrocarbons preferred for this disclosure are naphthalenes, phenanthrenes, perylenes, anthracenes, coronenes, pyrenes, and derivatives of the compounds in the aforementioned classes. A preferred organic compound is commercially available perylene red pigment, N,N'-di(3,5-xylyl)perylene-3,4:9,10 bis(dicarboximide), hereinafter referred to as perylene red. Among the classes of heterocyclic aromatic compounds preferred for this disclosure are phthalocyanines, porphyrins, carbazoles, purines, pterins, and derivatives of the compounds in the aforementioned classes. Representative examples of phthalocyanines especially useful for this disclosure are phthalocyanine and its metal complexes, e.g. copper phthalocyanine. A representative example of porphyrins useful for this disclosure is porphyrin.

Methods for making acicular elements are known in the art. For example, methods for making organic microstructured elements are disclosed in Materials Science and Engineering, A158 (1992), pp. 1-6; J. Vac. Sci. Technol. A, 5, (4), July/August, 1987, pp. 1914-16; J. Vac. Sci. Technol. A, 6, (3), May/August, 1988, pp. 1907-11; Thin Solid Films, 186, 1990, pp. 327-47; J. Mat. Sci., 25, 1990, pp. 5257-68; Rapidly Quenched Metals, Proc. of the Fifth Int. Conf. on Rapidly Quenched Metals, Wurzburg, Germany (Sep. 3-7, 1984), S. Steeb et al., eds., Elsevier Science Publishers B.V., New York, (1985), pp. 1117-24; Photo. Sci. and Eng., 24, (4), July/August, 1980, pp. 211-16; and U.S. Pat. Nos. 4,568,598 (Bilkadi et al.) and 4,340,276 (Maffitt et al). K. Robbie, et al, "Fabrication of Thin Films with Highly Porous Microstructures," J. Vac. Sci. Tech. A, Vol. 13 No. 3, May/June 1995, pages 1032-35 and K. Robbie, et al., "First Thin Film Realization of Bianisotropic Medium," J. Vac. Sci. Tech. A, Vol. 13, No. 6, November/December 1995, pages 2991-93.

For example, the organic compound is coated onto a substrate using techniques known in the art including, for example, vacuum vapor deposition (e.g., vacuum evaporation, sublimation, and chemical vapor deposition), and solution coating or dispersion coating (e.g., dip coating, spray coating, spin coating, blade or knife coating, bar coating, roll coating, and pour coating (i.e., pouring a liquid onto a surface and allowing the liquid to flow over the surface)). The layer of organic compound is then treated (for example, annealing, plasma etching) such that the layer undergoes a physical change, wherein the layer of organic compound grows to form a microstructured layer comprising a dense array of discrete, oriented monocrystalline or polycrystalline microstructured cores. Following this method, the orientation of the major axis of the microstructured cores is usually normal to the substrate surface.

In one embodiment, the organic compound is vapor coated onto a substrate. The substrate can be varied, and is selected to be compatible with the heating process. Exemplary substrates include polyimide and metal foils. The temperature of the substrate during vapor deposition can be varied, depending upon the organic compound selected. For perylene red, a substrate temperature near room temperature (25° C) is satisfactory. The rate of vacuum vapor deposition can be varied. Thickness of the layer of organic compound deposited can vary and the thickness chosen will determine the major dimension of the resultant microstructures after the annealing step is performed. Layer thicknesses is typically in a range from about 1 nm to about 1 micrometer, and preferably in a range from about 0.03 micrometer to about 0.5 micrometer. The layer of organic compound is then heated for a sufficient temperature and time, optionally under reduced pressure, such that the deposited organic compound undergoes a physical change resulting in the production of a microlayer comprising pure, single-or poly-crystalline microstructured cores. These single-or poly-crystalline microstructures are used to support a layer of catalytic material, forming the acicular particles of the present disclosure.

The catalytic material of the present disclosure comprises (i) platinum and (ii) at least one of iridium and ruthenium. The iridium may be an iridium-containing compound such as iridium oxide, IrOₓ, where x may be in the range from 0-2. The ruthenium may be a ruthenium-containing compound such as ruthenium oxide. The platinum, and iridium and/or ruthenium includes alloys thereof, and intimate mixtures thereof. The platinum, iridium, and/or ruthenium may be an alloy or intimate mixture with a metal such as a transition metal consisting of Group IV, Group VIb, Group VIIb, and Group VIIIb (other than Pt, Ir, and Ru). Exemplary metals include nickel, cobalt, hafnium, titanium, zirconium, and manganese.

The platinum and at least one of iridium and ruthenium may be disposed on the same microstructured core or may be disposed on separate microstructured cores.

In one embodiment, the microstructured core is coated with a layer comprising an alloy or intimate mixture of platinum and at least one of iridium and ruthenium. Exemplary alloys include platinum-iridium alloy, platinum-ruthenium alloy, and platinum-iridium-X alloy, where X may be hafnium, titanium, and zirconium. Exemplary catalytic materials include mixtures of platinum and iridium; mixtures of platinum and an iridium-X alloy; mixtures of iridium and a platinum-X alloy; mixtures of a platinum-titanium alloy and iridium; mixtures of a platinum-X alloy and an iridium-Y alloy, where X may be gold, hafnium, titanium, and zirconium and Y is gold, hafnium, titanium, and zirconium.

In one embodiment, the microstructured core is coated with a composite layer comprising layers of catalytic material. For example a first layer comprising platinum and a second layer comprising at least one of iridium and ruthenium. Such a layer is disclosed in U.S. Pat. No. 5,879,827 (Debe et al.) and 6,482,763 (Haugen et al.). In another embodiment, the composite layer comprises at least a first layer containing platinum, at least a second layer containing at least one of iridium and ruthenium, and optionally at least a third layer containing a refractory metal, wherein the third layer is between the first and second layers. Refractory metals include hafnium, niobium, osmium, rhenium, rhodium, tantalum, titanium, tungsten, and zirconium. The refractory metal may be a refractory metal, a refractory metal oxide, a refractory metal boride, a refractory metal carbide, a refractory metal nitride, or a refractory metal silicide. The refractory metal may include stoichiometric and nonstoichiometric forms of the oxides, borides, carbides, nitrides, silicides, and combinations thereof (e.g., oxycarbides, oxynitrides, oxyborides, carbonitrides, carboborides boronitrides, borosilicides, carbosilicides, and nitrosilicides). Further, two or more refractory metals can be combined into binary, ternary, quaternary, etc. mixtures (e.g., M-M₂-O-B-C-N-Si, where M is a refractory metal(s).

Exemplary Hf oxides and suboxides include HfO, Hf₂O₃, and HfO₂. Exemplary Hf borides include HfB and HfB₂. Exemplary Hf carbides include HfC and HfC₂. Exemplary Hf nitrides include Hf₃N₄ and HfN. Exemplary Hf silicides include HfSi and HfSi₂.

Exemplary Nb oxides include NbO, NbO₂, and Nb₂O₅. Exemplary Nb borides include Nb₂B, Nb₃B₂, NbB, Nb₃B₄, Nb₅B₆, and NbB₂. Exemplary Nb carbides include Nb₂C and NbC. Exemplary Nb nitrides include Nb₂N, NbN, and Nb carbonitride. Exemplary Nb silicides include Nb₅Si₃.

Exemplary Os oxides include OsO₂ and OsO₄. Exemplary Os borides include OsB and OsB₂. Exemplary Os carbides include OsC, OsC₃, and OsC₂. Exemplary Os nitrides include OsN, OsN₂, and OsN₄. Exemplary Os silicides include Os₂Si₃, OsSi, and OsSi₂.

Exemplary Re oxides include ReO₂, ReO₃, Re₂O₃, and Re₂O₇. Exemplary Re borides include Re₃B, Re₇B₃, Re₂B, ReB, Re₂B₃, Re₃B₇, Re₂B₅, and ReB₃. Exemplary Re carbides include Re₂C. Exemplary Re nitrides include Re₂N, Re₃N, and ReN. Exemplary Re silicides include ReSi and ReSi₂.

Exemplary Rh oxides include RhO, RhO₂, and Rh₂O₃. Exemplary Rh borides include ZrRh₃B,

NbRh₃B, and RhB. Exemplary Rh carbides include RhC, Rh₂C, Rh₃C and Rh₄C. Exemplary Rh nitrides include RhN, RhN₂, and RhN₃. Exemplary Rh silicides include CeRhSi₂ and Ce₂Rh₃Si₅.

Exemplary Ta oxides include TaO and Ta₂O₅. Exemplary Ta borides include Ta₂B, Ta₃B₂, TaB, Ta₅B₆, Ta₃B₄, and TaB₂. Exemplary Ta carbides include TaC, Ta₄C₃, and Ta₂C. Exemplary Ta nitrides include TaN, Ta₂N, Ta₅N₆, and Ta₃N₅. Exemplary Ta silicides include TaSi₂, Ta₅Si₃, and Ta5Si6.

Exemplary W oxides include W₂O₃ and WO₃. Exemplary W borides include W₂B, WB, WB₂, W₂B₅, and WB₄. Exemplary W carbides include WC and WC₂. Exemplary W nitrides include W₂N, WN, and WN₂. Exemplary W silicides include WSi₂ and W₅Si₃.

Exemplary Zr oxides include ZrO, Zr₂O₃, and ZrO₂. Exemplary Zr oxides or zirconia, which are doped with the metal oxides acting as stabilizers for its crystal structure include yttria-, calcia-, magnesia-, alumina- and ceria-stabilized zirconia or zirconia-hafnia. Exemplary Zr borides include ZrB₂. Exemplary Zr carbides include Zr₂C, Zr₃C₂, and Zr₆C₅. Exemplary Zr nitrides include Zr₃N₄ and ZrN. Exemplary Zr silicides include Zr₂Si, Zr₃Si₂, ZrSi₂, Zr₅Si₃, and ZrSi.

Typically this third layer has a thickness of at least 0.3, 0.5, 1, or even 2 nm; and no more than 5, 10, 20, 40, 60, or even 100 nm.

In one embodiment, the platinum is disposed on a first plurality of microstructured cores and the iridium and/or ruthenium is disposed on a second plurality of microstructured cores. The platinum layer may comprise an intimate mixture or alloy of platinum with another metal (besides iridium or ruthenium). Such metals may include gold, hafnium, titanium and/or zirconium. The iridium and/or ruthenium layer on the second plurality of microstrucutred cores may comprise an intimate mixture or alloy of iridium and/or ruthenium with another metal besides platinum. Exemplary mixtures or alloys include iridium-Z, ruthenium-Z, iridium-ruthenium, iridium-ruthenium-Z, where Z is gold, hafnium, titanium and/or zirconium. By having the platinum located on a first microstructured core and iridium and/or ruthenium located on a second microstructured core, may enable flexibility to tailor the electrode's properties.

In some embodiments, the atomic ratio of the combined Pt, Ir, and Ru to the other transition metal in the catalyst material is 5:95 to 99.9:0.1, 5:95 to 95:5, 10:90 to 90: 10, 20:80 to 80:20, 30:70 to 70:30 or even 40:60 and 60:40. In some embodiments, the weight ratio of platinum to the collective weight of iridium and/or ruthenium in the catalyst material can range from 1000:1 to 1:5, 100:1 to 1:5, 25:1 to 1:5, 10:1 to 1:3, 1000:1 to 1:1, 500:1 to 1:1, 250:1 to 1:1, 100:1 to 1:1, 50:1 to 1:1, 25:1 to 4:1, 25:1 to 1:1, 10:1 to 1:1, 10:1 to 1:1, 5:1 to 1:1, 2.5:1 to 1:1, 1000:1 to 2.5:1, 1000:1 to 10:1, 1000:1 to 25:1, 1000:1 to 50:1, 1000:1 to 100:1, 1000:1 to 250:1, 1000:1 to 500:1, and 10:3 to 4:3. These catalytic materials provide good fuel cell operation including efficient hydrogen oxidation reactions and reversal protection (easy oxidation evolution reactions).

The catalytic material is disposed on at least one surface (more preferably at least two or even three surfaces) of the plurality of microstructured cores. The catalytic material is disposed as a continuous layer across the surface such that electrons can continuously move from one portion of the acicular particle to another portion of the acicular particle. The layer of catalytic material on the surface of the organic compound creates a high number of reaction sites for reactions to occur including hydrogen oxidation and oxygen evolution.

In one embodiment, the catalytic material is deposited onto the surface of the organic compound initially creating a nanostructured catalyst layer, wherein the layer comprises a nanoscopic catalyst particle or a thin catalyst film. In one embodiment, the nanoscopic catalyst particles are particles having at least one dimension equal to or smaller than about 10 nm or having a crystallite size of about 10 nm or less, as measured from diffraction peak half widths of standard 2-tetha x-ray diffraction scans. The catalytic material can be further deposited onto the surface of the organic compound to form a thin film comprising nanoscopic catalyst particles which may or may not be in contact with each other.

In one embodiment, the thickness of the layer of catalytic material on the surface of the organic compound can vary, but typically ranges from at least 0.3, 0.5, 1, or even 2 nm; and no more than 5, 10, 20, 40, 60, or even 100 nm on the sides of the microstructured cores.

In one embodiment, the catalytic material is applied to the microstructured cores by vacuum deposition, sputtering, physical vapor deposition, or chemical vapor deposition.

In one embodiment, the acicular particles of the present disclosure are formed by first growing the microstructured cores on a substrate as described above, applying a layer of catalytic material onto the microstructured cores, and then removing the catalytically-coated microstructured cores from the substrate to form loose acicular particles. Such methods of making microstructured cores and/or coating them with catalytic material are disclosed in, for example, U.S. Pat. Nos. 5,338,430 (Parsonage et al.); 5,879,827 (Debe et al.); 5,879,828 (Debe et al.); 6,040,077 (Debe et al.); and 6,319,293 (Debe et al.); 6,136,412 (Spiewak et al.); and 6,482,763 (Haugen et al.).

Although the plurality of acicular particles can have a variety of shapes, the shape of the individual acicular particles are preferably uniform. Shapes include rods, cones, cylinders, and laths. In one embodiment, the acicular particles have a large aspect ratio, which is defined as the ratio of the length (major dimension) to the diameter or width (minor dimension). In one embodiment, the acicular particles have an average aspect ratio of at least 3, 5, 7, 10, or even 20 and at most 60, 70, 80, or even 100. In one embodiment, the acicular particles have an average length of more than 250, 300, 400, or even 500 nm (nanometer); and less than 750 nm, 1 micron, 1.5 microns, 2 microns, or even 5 microns. In one embodiment, the acicular particles have an average diameter (or width) of more than 15, 20, or even 30 nm; and less than 100 nm, 500 nm, 750 nm, 1 micron, 1.5 microns, or even 2 microns. Such length and diameter (or width) measurements can be obtained by transmission electron microscopy (TEM).

The size, i.e. length and cross-sectional area, of the acicular particles are generally uniform from particle to particle. As used herein, the term "uniform", with respect to size, means that the major dimension of the cross-section of the individual acicular particles varies no more than about 23% from the mean value of the major dimension and the minor dimension of the cross-section of the individual acicular particles varies no more than about 28% from the mean value of the minor dimension. The uniformity of the acicular particles provides uniformity in properties, and performance, of articles containing the acicular particles. Such properties include optical, electrical, and magnetic properties. For example, electromagnetic wave absorption, scattering, and trapping are highly dependent upon uniformity of the microlayer.

### Ionomer Binder

The ionomer binder is a polymer electrolyte material, which may or may not be the same polymer electrolyte material of the membrane of the electrochemical cell.

A useful polymer electrolyte material can include an anionic functional group such as a sulfonate group, a carbonate group, or a phosphonate group bonded to a polymer backbone and combinations and mixtures thereof. In one embodiment, the anionic functional group is preferably a sulfonate group. The polymer electrolyte material can include an imide group, an amide group, or another acidic functional group, along with combinations and mixtures thereof.

An example of a useful polymer electrolyte material is highly fluorinated, typically perfluorinated, fluorocarbon material. Such a fluorocarbon material can be a copolymer of tetrafluoroethylene and one or more types of fluorinated acidic functional co-monomers. Fluorocarbon resin has high chemical stability with respect to halogens, strong acids, and bases, so it can be beneficially used. For example, when high oxidation resistance or acid resistance is desirable, a fluorocarbon resin having a sulfonate group, a carbonate group, or a phosphonate group, and in particular a fluorocarbon resin having a sulfonate group can be beneficially used.

Exemplary fluorocarbon resins comprising a sulfonate group include perfluorosulfonic acid (e.g., Nafion), perfluorosulfonimid -acid (PFIA), sulfonated polyimides, sulfonated polytrifiuorostyrene, sulfonated hydrocarbon polymer, polysulfone, and polyethersulfone. Commercially available polymer electrolyte material include those available, for example, under the trade designation "DYNEON" from 3M Company, St. Paul, MN; "NAFION" from DuPont Chemicals, Wilmington, DE; "FLEMION" from Asahi Glass Co., Ltd., Tokyo, Japan; "ACIPLEX" from Asahi Kasei Chemicals, Tokyo, Japan; as well as those available from ElectroChem, Inc., Woburn, MA and Aldrich Chemical Co., Inc., Milwaukee, WI).

In one embodiment, the polymer electrolyte material is selected from a perfluoro-X-imide, where X may be, but is not limited to, methyl, butyl, propyl, phenyl, etc.

Typically, the equivalent weight of the ion conductive polymer is at least about 400, 500, 600 or even 700; and not greater than about 825, 900, 1000, 1200, or even 1500.

In one embodiment, the ratio of ionomer binder to the acicular particle is 0.01:1 to 1:10, more preferably 0.1:1 to 1:1.

### Carbon Particles

In the present disclosure, the catalyst composition comprises a plurality of carbon particles, in addition to the plurality of acicular particles, and the ionomer binder.

The carbon particles disclosed herein are those materials that comprise predominantly (e.g., greater than 90, 95, 99% mole) elemental carbon in the bulk.

Although, not wanting to be limited by theory, it is believed that these carbon particles improve the conductivity of the catalyst composition, allowing the use of fewer acicular particles; and additionally or alternatively, these carbon particles create pores enabling enhanced transport of, for example, gas and water.

The carbon particles may include amorphous carbons, crystalline carbons, graphitized carbons, and combinations thereof. In one embodiment, at least 10, 25, 50, 75, 90, 95, or even 99% of the carbon atoms in the carbon particle are ordered (i.e., crystalline). In one embodiment, less than 30, 20, 10, or even 5% of the carbon atoms in the carbon particle are ordered.

Exemplary carbons include, carbon black, acetylene black, graphite, graphene, graphitized carbon, carbon nanotubes, TKK F-type carbon, P-type carbon, graphitized Vulcan, and specialty carbon black such as those available under the trade designations "VULCAN XC 72" from Cabot Corp, Billerica, MA and the graphitized versions thereof; and those available under the trade designation "KETJENBLACK EC-600JD" by AkzoNobel Chemicals Co., Amersterdam, Netherlands and the graphitized versions thereof. In one embodiment, the carbon particles are substantially free of metals, meaning they comprise less than 1.0, 0.5, 0.1, or even 0.05 wt % of a metal.

The scope of useful carbon particles in this disclosure is not intended to be limited to the specific examples indicated hereinabove, but is intended to include all useful physical forms of carbons, such as powders, plates, rods, foams, felts, fibers, branched fibers, cloths, etc.

In one embodiment, the carbon particles are low aspect particles (having an aspect ratio less than 3 or even 2), wherein the average length of a major axis of the primary particle size is less than 100, 75, or even 50 nm in diameter. In one embodiment, the carbon particles have an average length of a major axis of greater than 10, 15, or even 20 nm, and less than 70, 60, or even 50 nm.

In one embodiment, the carbon particles are comprised of primary particles that are essentially irreversibly bonded together in the form of agglomerates, from which it is not possible to straightforwardly extract individual primary particle sizes. These agglomerated carbon particles should have an average length of a major axis of less than the thickness of the electrode, generally less than 20% of the thickness of the electrode. Exemplary average lengths of the major axis of the agglomerated particles is more than 200, 400, or even 800 nm; and less than 2 micrometers, or even 1 micrometer.

In one embodiment, the carbon particles are carbon nanotubes, wherein the carbon nanotubes have a length of less than 1 micrometers, or even less than 0.5 micrometers.

In one embodiment, the ratio of the carbon particles to the acicular particles is 1:100 to 100:1.

In one embodiment, the ratio of the carbon particles to the ionomer binder is 5:1 to 0.1:1, more preferably 2:1 to 0.5:1.

### Hydrophobic Polymer

In one embodiment, a hydrophobic particle or polymer such as fluorinated polymer is added to the catalyst composition. Exemplary fluorinated polymers include: polytetrafluoroethylene; FEP (a copolymer of hexafluoropropylene and tetrafluoroethylene); polyvinylidene fluoride; perfluoroalkoxy polymer; copolymers of ethylene and tetrafluoroethylene; copolymers of vinylidene fluoride, hexafluoroethylene, and tetrafluoroethylene; and copolymers of tetrafluoroethylene and norbene such as that available under the trade designation "TEFLON AF" from The Chemours Co., Wilmington, DE. In one embodiment, the ratio of hydrophobic particle or polymer to the acicular particles is 0.01:1 to 10:1, more preferably 0.01:1 to 0.5:1. In one embodiment, the ratio of the hydrophobic particle or polymer to the ionomer binder is 0.01:1 to 100:1, more preferably 0.01:1 to 2:1.

### Solvent

Typically, the plurality of microstructed elements is applied along with the ionomer binder, plurality of carbon particles, various solvents, and optionally the hydrophobic polymer in the form of a dispersion, for example, an ink or a paste.

In one embodiment, the plurality of acicular particles, ionomer binder, plurality of carbon particles, and optionally the hydrophobic polymer, are dispersed in a solvent. The solvent can include water, ketones (such as acetone, tetrahydrofuran, methyl ethyl ketone, and cyclohexanone), alcohols (such as methanol, isopropanol, propanol, ethanol, and propylene glycol butyl ether), polyalcohols (such as glycerin and ethylene glycol); hydrocarbons (such as cyclohexane, heptane, and octane), dimethyl sulfoxide, and fluorinated solvents such as heptadecafluorooctane sulfonic acid and partially fluorinated or perfluorinated alkanes or tertiary amines (such as those available under the trade designations "3M NOVEC" or "3M FLUORINERT" fluids from 3M Co., St. Paul, MN). In one embodiment, the catalyst composition is an aqueous dispersion, optionally comprising additional solvents and/or a dispersant.

In one embodiment, the catalyst composition contains 5-30 wt% solids (i.e., plurality of acicular particles, ionomer binder, plurality of carbon particles, and optionally the hydrophobic polymer) and more typically 10-25wt % solids.

In one embodiment, the catalyst composition may include a low amount of high boiling solvent such as those disclosed in U.S. Appl. No. 2009/0169949 (Hicks et al.). These solvents are higher boiling compounds, having a boiling point greater than 120, 140, 160, or even 180°C. Useful high boiling solvents may include alkanes, alkenes, amines, ethers, or aromatic compounds which may optionally be substituted. Useful high boiling solvents may include partially, highly or fully fluorinated alkanes, alkenes, amines, ethers, or aromatic compounds, which may optionally be substituted. Useful high boiling solvent may include fluorinated solvents such as partially or fully fluorinated alkanes or tertiary amines such as those available under the trade designations "3M NOVEC ENGINNERED FLUID" or "3M FLUOROINERT ELECTRONIC LIQUID", available from 3M Company, St. Paul, Minnesota; or non-fluorinated ethers such as propylene glycol butyl ether. In some embodiments, the catalyst composition according to the present disclosure contains 0.1-50%, more preferably 1-10% by weight of a high boiling solvent.

### Articles

In one embodiment, the catalyst composition is applied onto a substrate such as a polymer electrolyte membrane (PEM) or a gas diffusion layer (GDL); or a transfer substrate and subsequently transferred onto a PEM or GDL.

PEMs are known in the art. PEMs may comprise any suitable polymer electrolyte. The polymer electrolytes typically bear anionic functional groups bound to a common backbone, which are typically sulfonic acid groups but may also include carboxylic acid groups, imide groups, amide groups, or other acidic functional groups. The polymer electrolytes are typically highly fluorinated and most typically perfluorinated. Exemplary polymer electrolytes include those mentioned for the ionomer binder above. The polymer electrolytes are typically cast as a film (i.e. membrane) having a thickness of less than 50 microns, more typically less than 40 microns, more typically less than 30 microns, in some embodiments less than 25 microns, and in some embodiments about 15 microns. The PEM may consist of the polymer electrolyte or the polymer electrolyte may be imbibed into a porous support (such as PTFE). Examples of known PEMs include those available under the trade designations: "NAFION PFSA MEMBRANES" by E.I. du Pont de Nemours and Co., Wilmington, DE; "GORESELECT MEMBRANE" by W.L. Gore&Associates, Inc., Newark, DE; and "ACIPLEX" by Asahi Kasei Corp., Tokyo, Japan; and 3M membranes from 3M Co., St. Paul, MN.

GDLs are also known in the art. Typically the GDL is a carbon fiber sheet material selected from woven and non-woven carbon fiber constructions. Carbon fiber constructions which may be useful in the practice of the present disclosure may include those available under the trade designations "TORAY CARBON PAPER", "SPECTRACARB CARBON PAPER", "AFN" non-woven carbon cloth, "ZOLTEK CARBON CLOTH", Mitsubishi Rayon Corp. carbon papers, and the like. The GDL may be coated or impregnated with various materials, including carbon particle coatings, hydrophilizing treatments, and hydrophobizing treatments such as coating with polytetrafluoroethylene (PTFE).

Transfer substrates are a temporary support that is not intended for final use of the electrode and is used during the manufacture or storage to support and/or protect the electrode. The transfer substrate is removed from the electrode article prior to use. The transfer substrate comprises a backing often coated with a release coating. The electrode is disposed on the release coating, which allows for easy, clean removal of the electrode from the transfer substrate. Such transfer substrates are known in the art. The backing often is comprised of PTFE, polyimide, Polyethylene terephthalate, Polyethylene naphthalate (PEN), polyester, and similar materials with or without a release agent coating.

Examples of release agents include carbamates, urethanes, silicones, fluorocarbons, fluorosilicones, and combinations thereof. Carbamate release agents generally have long side chains and relatively high softening points. An exemplary carbamate release agent is polyvinyl octadecyl carbamate, available from Anderson Development Co. of Adrian, Mich., under the trade designation "ESCOAT P20", and from Mayzo Inc. of Norcross, Ga., marketed in various grades as RA-95H, RA-95HS, RA-155 and RA-585S.

Illustrative examples of surface applied (i.e., topical) release agents include polyvinyl carbamates such as disclosed in U.S. Pat. No. 2,532,011 (Dahlquist et al.), reactive silicones, fluorochemical polymers, epoxysilicones such as are disclosed in U.S. Pat. Nos. 4,313,988 (Bany et al.) and 4,482,687 (Kessel et al.), polyorganosiloxane-polyurea block copolymers such as are disclosed in European Appl. No. 250,248 (Leir et al.), etc.

Silicone release agents generally comprise an organopolysiloxane polymer comprising at least two crosslinkable reactive groups, e.g., two ethylenically-unsaturated organic groups. In some embodiments, the silicone polymer comprises two terminal crosslinkable groups, e.g., two terminal ethylenically-unsaturated groups. In some embodiments, the silicone polymer comprises pendant functional groups, e.g., pendant ethylenically-unsaturated organic groups. In some embodiments, the silicone polymer has a vinyl equivalent weight of no greater than 20,000 grams per equivalent, e.g., no greater than 15,000, or even no greater than 10,000 grams per equivalent. In some embodiments, the silicone polymer has a vinyl equivalent weight of at least 250 grams per equivalent, e.g., at least 500, or even at least 1000 grams per equivalent. In some embodiments, the silicone polymer has a vinyl equivalent weight of 500 to 5000 grams per equivalent, e.g., 750 to 4000 grams per equivalent, or even 1000 to 3000 grams per equivalent.

Commercially available silicone polymers include those available under the trade designations "DMS-V" from Gelest Inc., e.g., DMS-V05, DMS-V21, DMS-V22, DMS-V25, DMS-V31, and DMS-V33. Other commercially available silicone polymers comprising an average of at least two ethylenically-unsaturated organic groups include "SYL-OFF 2-7170" and "SYL-OFF 7850" (available from Dow Corning Corporation), "VMS-T11" and "SIT7900" (available from Gelest Inc.), "SILMER VIN 70", "SILMER VIN 100" and "SILMER VIN 200" (available from Siltech Corporation), and 2,4,6,8-tetramethyl-2,4,6,8-tetravinylcyclotetrasiloxane (available from Aldrich).

The release agent may also comprise a fluorosilicone polymer. Commercially available ethylenically unsaturated fluorosilicone polymers are available from Dow Corning Corp. (Midland, Mich.) under the SYL-OFF series of trade designations including, e.g., "SYL-OFF FOPS-7785" and "SYL-OFF FOPS-7786". Other ethylenically unsaturated fluorosilicone polymers are commercially available from General Electric Co. (Albany, N.Y.), and Wacker Chemie (Germany). Additional useful ethylenically unsaturated fluorosilicone polymers are described as component (e) at column 5, line 67 through column 7, line 27 of U.S. Pat. No. 5,082,706 (Tangney). Fluorosilicone polymers are particularly useful in forming release coating compositions when combined with a suitable crosslinking agent. One useful crosslinking agent is available under the trade designation "SYL-OFF Q2-7560" from Dow Coming Corp. Other useful crosslinking agents are disclosed in U.S. Pat. Nos. 5,082,706 (Tangney) and 5,578,381 (Hamada et al.).

The electrode composition may be initially mixed together in an ink, paste or dispersion. As such, the electrode composition may then be applied to a PEM, GDL, or transfer article in one or multiple layers, with each layer having the same composition or with some layers having differing compositions. Coating techniques as known in the art may be used to coat the electrode composition onto a substrate. Exemplary coating methods include knife coating, bar coating, gravure coating, spray coating, etc.

After coating, the coated substrate is typically dried to at least partially remove the solvent from the electrode composition, leaving an electrode layer on the substrate.

### Electrochemical Cell

The catalyst coated PEM or catalyst coated GDL may be useful in an electrochemical cell such as a fuel cell. Specifically the catalyst composition of the present disclosure can find particular use in the anode portion of a hydrogen fueled fuel cell.

In one embodiment of the present disclosure, the fuel cell assembly comprises an anode electrode made from the composition of the present disclosure. The MEA is the central element of a proton exchange membrane fuel cell, such as a hydrogen fuel cell. Fuel cells are electrochemical cells which produce usable electricity by the catalyzed combination of a fuel such as hydrogen and an oxidant such as oxygen. Typically, one face of an ion conducting membrane is in contact with an anode electrode layer and the opposite face is in contact with a cathode electrode layer. In typical use, hydrogen gas is fed to the anode side of the fuel cell, while air, an oxygen source, is fed to the cathode side. During use, protons are formed at the anode via hydrogen oxidation. The protons are transported across the ion conducting membrane to the cathode to react with oxygen, causing electrical current to flow in an external circuit connecting the electrodes. The ion conducting membrane forms a durable, non-porous, electronically non-conductive mechanical barrier between the reactant gases, yet it also passes H⁺ ions readily. Gas diffusion layers (GDL's) facilitate reactant and product water transport to and from the anode and cathode electrode materials and conduct electrical current. The GDL is both porous and electrically conductive, and is typically composed of carbon fibers. The GDL may also be called a fluid transport layer or a diffuser/current collector. In some embodiments, the anode and cathode electrode layers are applied to GDL's to form catalyst coated backing layers (CCB's) and the resulting CCB's sandwiched with a PEM to form a five-layer MEA. The five layers of a five-layer MEA are, in order: anode GDL, anode electrode layer, PEM, cathode electrode layer, and cathode GDL. In other embodiments, the anode and cathode electrode layers are applied to either side of the PEM, and the resulting catalyst-coated membrane (CCM) is sandwiched between two GDL's to form a five-layer MEA. In operation, the five-layer MEA is positioned between two flow field plates to form an assembly and in some embodiments, more than one assembly is stacked together to form a fuel cell stack.

In nominal operation, the anode potential is ideally near zero volts relative to a reversible hydrogen electrode or at most a few tenths of a volt positive during high current density operation. The cathode voltage is typically at positive voltages between 0.6 and 1.23 volts (V) relative to reversible hydrogen electrode potentials. However, due to various real-life operating scenarios, the electrodes of the fuel cell can be deprived of the required concentration of reactant. When this happens on the anode, the fuel cell anode electrocatalyst will be forced to oxidize something else in addition to any available hydrogen in order to generate and provide the current demanded by the fuel cell.

Occasionally, while electrical current is being demanded from the fuel cell and oxidant (such as air) is being supplied to the cathode side, the anode becomes starved of fuel (typically hydrogen). At this point, the anode potential rises until an alternate source of fuel to be oxidized is found. Alternate fuels commonly found in polymer electrolyte fuel cells include carbon and water. Typically in a hydrogen fuel cell, carbon may be present in the GDL and/or the electrode as a carbon black-supported catalyst. Above approximately 0.8V (volts) versus reversible hydrogen electrode potential, carbon oxidation (corrosion) begins, producing carbon monoxide and carbon dioxide gases, which exit the fuel cell. As the carbon is oxidized, the anode electrode may be damaged due to loss of electronic conductivity within the electrode and/or GDL, due to loss of gas porosity, and due to changes in the hydrophobic and/or hydrophilic properties of the electrode and/or GDL. As the anode potential increases further the carbon corrosion rate can increase. With common carbon materials found in polymer electrolyte membrane fuel cells, carbon corrosion becomes significant above 1.2V, and above 1.5V carbon corrosion may become damaging in minutes. A second source of oxidation current is oxygen evolution from water electrolysis. Above 1.23V water electrolysis begins on the anode, where water is oxidized to produce oxygen gas, hydrogen ions, and electrons. The rates of carbon corrosion and water electrolysis depend upon the materials used (carbon type, catalyst type) and the anode potential reached. During anode reversal, anode potentials rise until carbon corrosion and water electrolysis collectively generate the overall current demanded from the fuel cell. If anode electrode potentials rise above 1.5V in order to generate the demanded current, damaging amounts of carbon corrosion may occur. The addition of Iridium and/or Ruthenium to an anode electrode already containing Platinum, either by alloying with Pt, layering with Pt, or as separate discrete particles, has been shown to improve the rate of water electrolysis. Subsequently, under reversal, the increased water electrolysis rate reduces the anode potential required to meet the demanded current, thereby reducing the carbon corrosion rate and possible damage to the PEM fuel cell anode.

In the case of a fuel starvation event, the anode potential quickly rises until potentials are reached where carbon, platinum and water are oxidized at sufficient rate to support the current demand. Carbon oxidation results in degradation of carbon-supported catalyst layers and the gas diffusion layers, leading to increased resistance and mass transport losses. Platinum oxidation may result in formation of soluble platinum oxide species, resulting in loss of electrode surface area. Any of these effects may be irreversible, and may over time cause accumulated degradation of the fuel cell performance.

In the present disclosure, it has been recognized that the combination of dispersed acicular particles along with a plurality of carbon particles in the electrode has good reversal tolerance while not sacrificing performance. In one embodiment, when tested per the Cell performance after reversal as described in the Examples Section, an electrode has good reversal tolerance if, when exposed to reversal conditions for more than 10 000, 15 000, 20 000, or even 30 000 seconds, the performance when characterized by GDS does not drop below 0.4 volts. In one embodiment, an electrode has good performance if, when tested by the Hydrogen sensitivity test disclosed in the Example Section, the electrode performs similarly to an electrode made using a carbon-supported electrode having a similar (within 10%) areal catalyst loading. Similar performance means that at 40% H₂ in N₂, the cell voltage is within 0.1 volts, or even 0.05 volts. In one embodiment, an electrode has good performance if, when tested by the GDS test disclosed in the Example Section, the electrode performs similarly to an electrode made using a carbon-supported electrode having a similar (within 10%) areal catalyst loading. In this situation, a similar performance means that at 1A/cm², the cell voltage is within 20 millivolts, or even 10 millivolts.

Though not bound by theory, it is believed that the dispersing of the acicular particles within the electrode enables more catalyst to be present and therefore more catalyst area (and more catalyst reactive sites) enabling improved performance (e.g., as observed by increased voltage for a given current density in the hydrogen sensitivity test and/or the GDs).In the absence of carbon, the pores of the electrode are defined by the metal, which is relatively hydrophilic. Thus, water may tend to accumulate at the surface of the catalyst. Although the addition of carbon is expected to corrode under reversal conditions, in the present application, the presence of the carbon particles is believed to provide hydrophobic pores, which reduce water content near the surface of the catalysts, enabling the reactant gasses to reach the reactant sites. Further, unlike traditional carbon-supported catalysts (such as TKK 10EA50E), the metal catalyst is not directly disposed on the carbon particles, which is known to accelerate carbon corrosion. By separation of the carbon particles from the metal catalyst enables longer use of the electrode, i.e., the lifetime is extended.

Exemplary embodiments of the present disclosure include, but are not limited to the following:
Embodiment 1. A composition comprising:
   (a) a plurality of acicular particles, wherein the acicular particles comprise a microstructured core with a layer of catalytic material on at least one portion of the surface of the microstructured core, wherein the microstructured core comprises at least one of a polynuclear aromatic hydrocarbon and heterocyclic compounds, and the catalytic material comprises (i) platinum and (ii) at least one of iridium, ruthenium, or combinations thereof;
   (b) ionomer binder;
   (c) solvent; and
   (d) a plurality of carbon particles,
   wherein the plurality of acicular particles is not oriented.
Embodiment 2. The composition of embodiment 1, wherein the layer of catalytic material comprises at least one of (i) an alloy or intimate mixture of platinum, iridium, and X; (ii) an alloy or intimate mixture of platinum, ruthenium, and X, and (iii) an alloy or intimate mixture of platinum, iridium, ruthenium, and X, where X is at least one of nickel, cobalt, hafnium, titanium, zirconium, manganese, and combinations thereof.
Embodiment 3. The composition of embodiment 1, wherein the layer of catalytic material is a composite layer comprising a first layer which contains platinum and a second layer which contains at least one of iridium and ruthenium.
Embodiment 4. The composition of embodiment 3, further comprising a third layer disposed between the first and second layers, wherein the third layer comprises a refractory metal.
Embodiment 5. The composition of embodiment 4, wherein the refractory metal comprises at least one of a refractory metal, a refractory metal oxide, a refractory metal boride, a refractory metal carbide, a refractory metal nitride, and a refractory metal silicide.
Embodiment 6. The composition of any one of embodiments 4-5, wherein the refractory metal is at least one of hafnium, niobium, osmium, rhenium, rhodium, tantalum, titanium, tungsten, zirconium, or combinations thereof.
Embodiment 7. The composition of any one of embodiments 3-6, wherein the first layer comprises an alloy or intimate mixture of platinum with at least one of nickel, cobalt, hafnium, titanium, zirconium, manganese, or combinations thereof.
Embodiment 8. The composition of any one of embodiments 3-7, wherein the second layer comprises an alloy or intimate mixture of (i) iridium, (ii) ruthenium, or (iii) iridium and ruthenium with at least one of nickel, cobalt, hafnium, titanium, zirconium, manganese, or combinations thereof.
Embodiment 9. A composition comprising:
   (a) a plurality of acicular particles comprising first and second pluralities of acicular particles, wherein the first plurality of acicular particles comprise a first microstructured core with a first layer of catalytic material on at least one portion of the surface of the first microstructured core, wherein the first layer of catalytic material comprises platinum; and wherein the second plurality of acicular particles comprise a second microstructured core with a second layer of catalytic material on at least one portion of the surface of the second microstructured core, wherein the second layer of catalytic material comprises at least one of iridium and ruthenium and wherein the first and second microstructured cores independently comprise at least one of a polynuclear aromatic hydrocarbon and heterocyclic compounds;
   (b) ionomer binder;
   (c) solvent; and
   (d) a plurality of carbon particles,
   wherein the plurality of acicular particles is not oriented.
Embodiment 10. The composition of embodiment 9, wherein the first layer of catalytic material an intimate mixture or alloy of platinum and Y, where Y is at least one of gold, hafnium, titanium, zirconium, or combinations thereof.
Embodiment 11. The composition of any one of embodiments 9-10, wherein the second layer of catalytic material an intimate mixture or alloy of (i) iridium-Y; (ii) ruthenium-Y; (iii)iridium-ruthenium; (iv) iridium-ruthenium-Y, where Y is at least one of gold, hafnium, titanium, zirconium, or combinations thereof.
Embodiment 12. The composition of any one of the previous embodiments, wherein the iridium is iridium oxide.
Embodiment 13. The composition of any one of the previous embodiments, wherein the layer of catalytic material comprises one or more thin films of catalytic material.
Embodiment 14. The composition of any one of the previous embodiments, wherein the layer of catalytic material comprises a nanostructured catalyst layer.
Embodiment 15. The composition of any one of the previous embodiments, wherein the weight ratio of platinum to the collective weight of iridium and/or ruthenium in the catalytic material is at least 1000:1 and at most 1:1.
Embodiment 16. The composition of any one of the previous embodiments, wherein the weight ratio of platinum to the collective weight of iridium and/or ruthenium in the catalytic material is at least 1000:1 and at most 1:5.
Embodiment 17. The composition of any one of the previous embodiments, wherein the atomic ratio of the combined Pt, Ir, and Ru to the other transition metals in the catalytic material is at least 5:95 and at most 95:5.
Embodiment 18. The composition of any one of the previous embodiments, wherein the atomic ratio of the combined Pt, Ir, and Ru to the other transition metals in the catalytic material is at least 5:95 and at most 99.9:0.1.
Embodiment 19. The composition of any one of the previous embodiments, wherein the polynuclear aromatic hydrocarbon comprises perylene red.
Embodiment 20. The composition of any one of the previous embodiments, wherein the acicular particles have an aspect ratio of at least 3.
Embodiment 21. The composition of any one of the previous embodiments, wherein the carbon particles comprises at least one of: carbon black, graphite, graphene, graphitized carbon, carbon nanotubes, and combinations thereof.
Embodiment 22. The composition of any one of the previous embodiments, wherein the carbon particles have an average major axis of the particle of less than 250 nm.
Embodiment 23. The composition of any one of the previous embodiments, wherein the ionomer binder comprises at least one of perfluorosulfonimid-acid, imide, polyether sulfone, or combinations thereof.
Embodiment 24. The composition of any one of the previous embodiments, wherein the ionomer binder has an equivalent weight of not greater than 1000.
Embodiment 25. The composition of any one of the previous embodiments, wherein the solvent comprises at least one of an alcohol, a polyalcohol, a ketone, water, a fluorinated solvent, and combinations thereof.
Embodiment 26. The composition of any one of the previous embodiments, wherein the composition further comprising a hydrophobic particle or polymer.
Embodiment 27. The composition of any one of the previous embodiments, wherein the composition comprises 1-40 wt % solids.
Embodiment 28. An article comprising: a substrate with a coating thereon, the coating comprising
   (a) a plurality of acicular particles, wherein the acicular particles comprise a microstructured core with a layer of catalytic material on at least one portion of the surface of the microstructured core, wherein the microstructured core comprises at least one of a polynuclear aromatic hydrocarbon and heterocyclic compounds, and the catalytic material comprises (i) platinum and (ii) at least one of iridium and ruthenium;
   (b) ionomer binder; and
   (c) a plurality of carbon particles,
   wherein the plurality of acicular particles is not oriented.
Embodiment 29. An article comprising: a substrate with a coating thereon, the coating comprising
   (a) a plurality of acicular particles comprising first and second pluralities of acicular particles, wherein the first plurality of acicular particles comprise a first microstructured core with a first layer of catalytic material on at least one portion of the surface of the first microstructured core, wherein the first layer of catalytic material comprises platinum; and wherein the second plurality of acicular particles comprise a second microstructured core with a second layer of catalytic material on at least one portion of the surface of the second microstructured core, wherein the second layer of catalytic material comprises at least one of iridium and ruthenium and wherein the first and second microstructured cores independently comprise at least one of a polynuclear aromatic hydrocarbon and heterocyclic compounds;
   (b) ionomer binder; and
   (c) a plurality of carbon particles,
   wherein the plurality of acicular particles is not oriented.
Embodiment 30. The article of any one of embodiments 28-29, wherein the substrate is a gas diffusion layer, a liner, or an ion conductive membrane.
Embodiment 31. A method of generating electricity comprising:
   providing a fuel cell comprising an anode portion and a cathode portion and an ion conductive membrane there between, wherein the anode comprises the article of any one of embodiments 28-30; and
   adding hydrogen into the anode portion of the fuel cell.

### EXAMPLES

Unless otherwise noted, all parts, percentages, ratios, etc. in the examples and the rest of the specification are by weight, and all reagents used in the examples were obtained, or are available, from general chemical suppliers such as, for example, Sigma-Aldrich Company, Saint Louis, Missouri, or may be synthesized by conventional methods.

These abbreviations are used in the following examples: A = amps, cm = centimeters, g = grams, °C = degrees Celsius, RH = relative humidity, mA = milliAmps, mol = moles, sccm = standard cubic centimeters per minute, and V = volt.

| **Materials** | |
|---|---|
| **Abbreviation** | **Description** |
| PFSA Ionomer | Perfluorosulfonic acid ionomer, equivalent weight 825 grams per protogenic group available as a powder under the trade designation "3M825EW" from 3M Company, St. Paul, MN, USA. |
| Ionomer Membrane | Perfluorosulfonic acid ionomer membrane, 14 micrometers thick, equivalent weight 725 grams per protogenic group, available under the trade designation "3M725EW" from 3M Company, St. Paul, MN, USA. |
| Catalyst 1 | Carbon-supported platinum catalyst, available under the trade designation "TKK 10EA50E" from Tanaka Kikinzoku Kogyo (TKK), Tokyo, Japan, 50 wt% Pt on carbon. |
| Catalyst 2 | Carbon-supported platinum catalyst, available under the trade designation "TKK 10VA20E" from Tanaka Kikinzoku Kogyo (TKK), Tokyo, Japan, 20 wt% Pt on carbon. |
| Catalyst 3 | Unsupported iridium oxide powder catalyst, available under the trade designation "TKK IrOx" from Tanaka Kikinzoku Kogyo (TKK), Tokyo, Japan. |
| Catalyst 4 | Carbon-supported platinum-cobalt catalyst, available under the trade designation "TKK 36F32" from Tanaka Kikinzoku Kogyo (TKK), Tokyo, Japan. |
| Acicular Particle 1 | Nanostructured Thin Film (NSTF) organic-pigment-supported catalyst, bearing 50 micrograms/cm² of sputter-deposited Pt and 15 micrograms/cm² of Ir (as measured geometrically on the deposition substrate film.) The Pt and Ir were deposited sequentially on the same organic pigment whisker, with Ir as the final layer, prepared as described below. |
| Acicular Particle 2 | Nanostructured Thin Film (NSTF) organic-pigment-supported catalyst, bearing 50 micrograms/cm² of sputter-deposited Pt and 40 micrograms/cm² of Ir (as measured geometrically on the deposition substrate film.) The Pt and Ir were deposited sequentially on the same organic pigment whisker, with Ir as the final layer, prepared as described below. |
| Acicular Particle 3 | Nanostructured Thin Film (NSTF) organic-pigment-supported catalyst, bearing 20 micrograms/cm² of sputter-deposited Pt and 15 micrograms/cm² of Ir (as measured geometrically on the deposition substrate film.) The Pt and Ir were deposited sequentially on the same organic pigment whisker, with Ir as the final layer, prepared as described below. |
| Acicular Particle 4 | Nanostructured Thin Film (NSTF) organic-pigment-supported catalyst, bearing 25 micrograms/cm² of sputter-deposited Pt (as measured geometrically on the deposition substrate film.) |
| Acicular Particle 5 | Nanostructured Thin Film (NSTF) organic-pigment-supported catalyst, bearing 25 micrograms/cm² of sputter-deposited Ir (as measured geometrically on the deposition substrate film.) |
| Carbon Black | Conductive carbon black particles, available under the trade designation "VULCAN XC 72" from Cabot Corporation, Bilerica, MA. This material has an effective surface area of 250-300 m²/g. |
| Graphitized Carbon | Graphitized "VULCAN" carbon, effective surface area 80 m²/g, available under the trade designation "TANAKA VA-CARBON" from Tanaka Kikinzoku Kogyo (TKK), Tokyo, Japan. |
| Ungraphitized Carbon | Ungraphitized carbon, effective surface area 800 m²/g, available under the trade designation "TANAKA F-CARBON" from Tanaka Kikinzoku Kogyo (TKK), Tokyo, Japan. |
| GDL | Hydrophobized gas diffusion layer (GDL) carbon paper with a microporous layer, available under the trade designation "GDL 2979" from 3M Company, St. Paul, MN. |
| Polyimide film | Polyimide film obtained under the trade designation "KAPTON" from E.I. du Pont de Nemours, Wilmington, DE. |
| Perylene Red | Perylene red pigment (i.e., N,N'-di(3,5-xylyl)perylene-3,4:9,10-bis(dicarboximide), obtained under the trade designation "C.I. PIGMENT RED 149," also known as "PR149", from Clariant, Charlotte, NC. |

### Preparation of Microstructured Perylene Red

A roll-good web of Polyimide film was used as the substrate on which the Perylene Red was deposited. The Polyimide film had a textured surface comprising V-shaped features, which had about 3 micrometer tall peaks, spaced about 6 micrometers apart. A nominally 100 nm thick layer of chromium (Cr) was sputter deposited onto the textured surface using a DC magnetron planar sputtering target and typical background pressures of argon and target powers known to those skilled in the art sufficient to deposit the Cr in a single pass of the web under the target at the desired web speed as described in U.S. Pat. No. 6,136,412.

The Cr-coated polyimide web then continued over a sublimation source containing Perylene Red. The Perylene Red was heated to a controlled temperature near 500°C so as to generate sufficient vapor pressure flux to deposit 0.022 mg/cm², or an approximately a 220 nm thick layer of the Perylene Red in a single pass of the web over the sublimation source. The mass or thickness deposition rate of the sublimation can be measured in any suitable fashion known to those skilled in the art, including optical methods sensitive to film thickness, or quartz crystal oscillator devices sensitive to mass. The Perylene Red coating was then converted to a microstructured material by thermal annealing, by passing the Perylene Red coated web through a vacuum having a temperature distribution sufficient to convert the Perylene Red as-deposited layer into a layer of oriented crystalline whiskers at the desired web speed. The whisker layer had an average whisker areal number density of 68 whiskers per square micrometer, determined from scanning electron microscopy (SEM) images, with an average length of 0.6 micrometer.

### Preparation of Acicular Particles

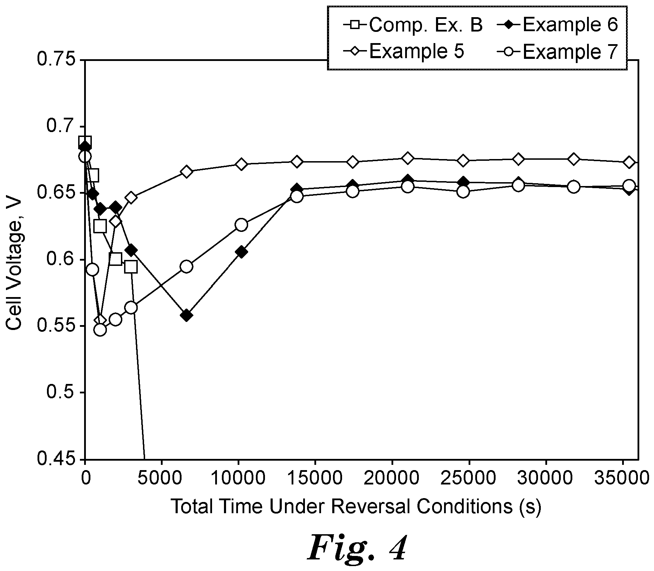

For Acicular Particle 1, a roll-good of the Microstructured Perylene Red described above was loaded into a DC magnetron vacuum sputter deposition system similar to that described in Fig. 4A of U.S. Pat. No. 5,879,827 (Debe et al.), but equipped with additional capability to allow coatings on roll-good substrate webs. The DC magnetron system was equipped with a 5 inch x 15 inch (13 cm x 38 cm) Pt sputtering target (Materion, Mayfield Heights, OH) and a 5 inch x 15 inch (13 cm x 38 cm) Ir sputtering target (Materion, Mayfield Heights, OH). The catalyst coatings were sputter deposited by using ultra high purity argon as the sputtering gas at approximately 5 mTorr pressure. The DC magnetron sputtering target deposition rates were measured by standard methods known to those skilled in the art. The DC magnetron sputtering process was used to first sputter coat sequential layers of Pt-containing material onto all sections of the roll-good. The roll-good web was repeatedly exposed to the energized planar Pt sputtering target. The Pt deposition rate, speed by which the web passed under the sputter target, and the number of times the web was exposed to the energized Pt target were controlled to give the desired areal loading of 50 micrograms of Pt per cm². Next, sequential layers of an Ir-containing material were deposited onto all sections of the Pt-coated roll-good of Microstructure Perylene Red. The roll-good web was repeatedly exposed to the energized planar Ir sputtering target. The Ir deposition rate, speed by which the web passed under the sputter target, and the number of times the web was exposed to the energized Ir target were controlled to give the desired areal loading of 15 micrograms of Ir per cm². The roll-good web containing the Acicular Particles was then removed from the deposition system.

Acicular Particle 2 was made as described for Acicular Particle 1, but the Ir deposition process was modified such that the areal Ir loading was 40 micrograms per cm².

Acicular Particle 3 was made as described for Acicular Particle 1, but the Pt and Ir deposition process was modified such that the areal Pt and Ir loadings were 20 and 15 micrograms per cm², respectively.

Acicular Particle 4 was made as described for Acicular Particle 1, but the Pt deposition process was modified such that the areal Pt loading was 25 micrograms per cm² and no Ir deposition was performed

Acicular Particle 5 was made as described for Acicular Particle 1, but the Ir deposition process was modified such that the areal Ir loading was 25 micrograms per cm² and no Pt deposition was performed.

### General Electrochemical Cell Construction

All tests described below were done in the same electrochemical cell, using the same type of ion exchange membrane and cathode construction. The anode constructions were varied as described below in each specific Example or Comparative Example.

### Cathode Catalyst Layer Decal Preparation

A dispersed catalyst composition was made comprising Catalyst 4 and PFSA Ionomer. The ratio of ionomer to the amount of carbon in Catalyst 4 was 11/10. The catalyst ink solution was coated on the silicone side of a silicone coated polyethylene terephthalate (PET) release liner film with a Mayer rod, then dried at 130°C for 10 minutes to form a cathode catalyst layer decal.

### Catalyst coated membrane (CCM) preparation

Ionomer Membrane was placed between the cathode catalyst layer decal prepared above and an anode catalyst layer decal (as described in the Comparative Examples and Examples below), with the liners on the outside of the construction and the catalysts facing the Ionomer Membrane. The construction was hot roll laminated using heated steel 6 inch (15.2 cm) diameter rollers heated to 325°F (163°C) at a roller speed of 1.2 feet per minute (0.37 m/s) with the rollers compressed together with 625 pounds of force per lineal inch (110 kilograms per lineal cm), calculated from the width of the Ionomer membrane. The silicone coated PET release liner was removed from the construction immediately after lamination to form a CCM.

### Assembling single cell fuel test station

The CCM was installed between two GDLs and placed directly into a 50 cm² single fuel cell (obtained under the trade designation "50 CM² CELL HARDWARE" (50SCH) from Fuel Cell Technologies, Albuquerque, NM), with quad serpentine graphite flow fields, and with gaskets selected to give 10% compression of the gas diffusion layers. After assembly, the test cell was connected to a test station (obtained under the trade designation "SINGLE FUEL CELL TEST STATION" from Fuel Cell Technologies, Inc.) A supply of hydrogen gas was provided to the anode side and air was supplied to the cathode side. The test station was used to control the applied cell voltage or current density, the hydrogen gas and air gas pressures, flow rates, and water vapor content (relative humidity), and the test cell temperature.

### Testing Procedures

### Cell Conditioning

After assembling the test cell and connecting it to the test station, each CCM was subjected to a conditioning or "break-in" period before performance testing. A hydrogen stream was connected to the anode side of the test cell and air was connected to the cathode side of the test tell. The test cell was operated at 60°C and 100% relative humidity for both the H₂ and air streams at a hydrogen flow rate of 800 sccm and air flow at 1800 sccm. Potentiodynamic scans of cell voltage from 0.9 V to 0.3 V were run repeatedly until steady state power output was reached.

### Hydrogen sensitivity

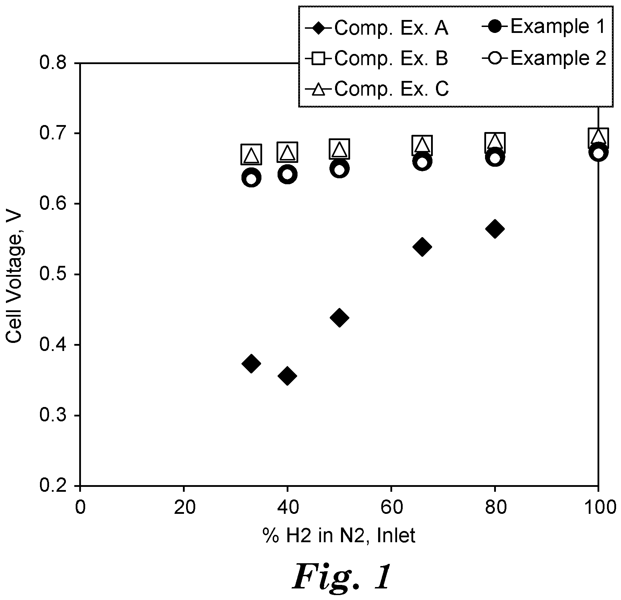

The single cell fuel cell test station containing the designated CCM was operated at 40°C, cell current density of 1 A/cm², hydrogen to air stoichiometry of 2/3.5, with the anode side input consisting of various mixtures of hydrogen and nitrogen at 100% relative humidity, ranging from 33% to 100 mol% H₂ on a dry gas basis. The cell output voltage was measured for 2 minutes for each measured percentage of H₂ in the fuel. The data point plotted in Fig. 1 is the average voltage experienced over the last one minute of the measurement.

### Polarization curves (Galvanodynamic scans, GDS)

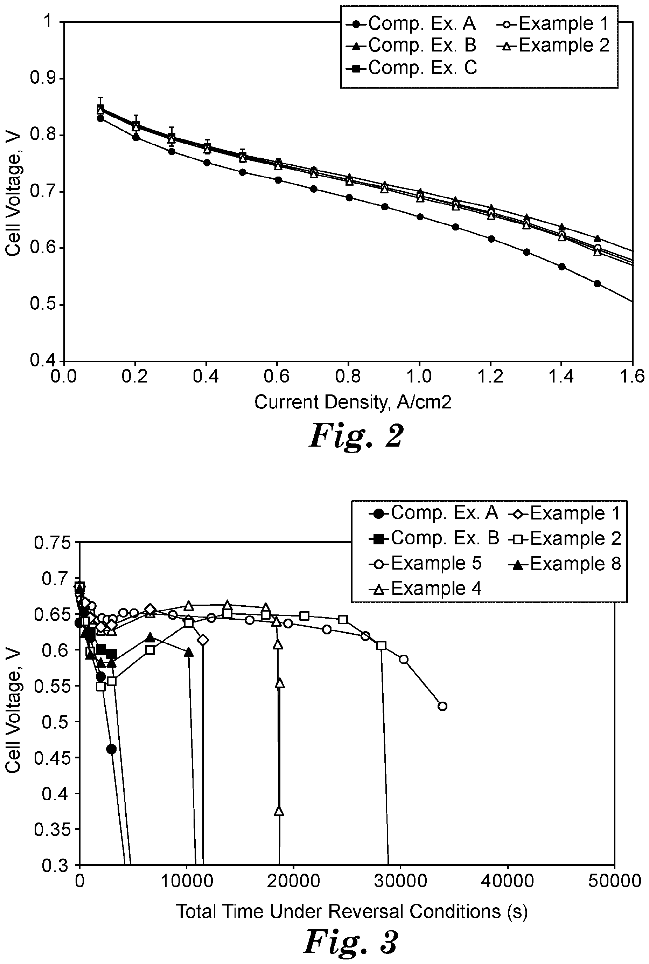

Polarization curves for the designated CCMs were obtained by measuring the cell output voltage of the hydrogen fuel cell versus current density. The cell was operated at 70°C, with both the hydrogen and air input gas streams at 100% relative humidity, with a hydrogen-to-air flow rate stoichiometry of 1.7/2.5, and with both sides at atmospheric pressure at the cell exit. Voltage measurements begin at a current density set point of 0.1 Amp/cm². Current density was increased at 0.1 Amps/cm² increments up to either a maximum current density of 2.0 Amps/cm² or a minimum measured cell voltage of 0.2 volts, whichever came first. After this limit was reached, the current density set point was then decreased at 0.1 Amps/cm² increments until 0.1 Amps/cm² was reached, concluding the test. Shown in Fig. 2 is the reverse scan for each sample. Voltage was measured at every current density set point for a period of 60 seconds. Voltage over the final 30 seconds was averaged to generate a data point at each current density reported in Fig. 2.

### Cell performance after reversal

After cell conditioning and an initial hydrogen sensitivity testing, the test cell comprising the designated CCM was subjected to reversal conditions and characterized. The cell characterization consisted of GDS scans as described above. The cell was operated at 70°C and 100% RH during cell reversal. When in cell reversal mode, the cell was operated at 200 mA/cm², with an anode gas flow rate of 300 sccm of pure N₂ and a cathode flow rate of 4000 sccm of air. Initially, the test cell was run under reversal conditions for 100 s then returned to normal fuel cell operation, followed by characterization by GDS as described above. Then the test cell was reversed again, this time for 500 s, returned to normal operation and characterized by GDS. The test cell was reversed again, this time for 1000 s, returned to normal operation and characterized by GDS. The test cell was reversed again, this time for 3600 s, returned to normal operation and characterized by GDS. Thereafter, the test cell was reversed at 3600 s increments, returned to normal operation, and characterized by GDS. Shown in Figs 3 and 4 are the average cell voltage from the forward scan in the GDS at 1 Amp/cm² following each of the reversal times. The x-axis in the figures is the cumulative time that the test cell was run under the reversal conditions.

### Comparative Example A

The anode catalyst layer decal used in Comparative Example A was made using Acicular Particle 1, which comprised a polyimide film having oriented Perylene Red whiskers extending therefrom and the Perylene Red whiskers were coated with a nanostructured thin film catalyst having a planar equivalent loading of 0.050 mg/cm² of platinum and 0.015 mg/cm² of iridium. The anode catalyst layer decal was directly laminated to one side of the Ionomer Membrane, and did not contain added carbon particles or ionomer. The polyimide film was removed after lamination to form the CCM, which was then assembled in the single cell fuel test station and tested as described above.

### Comparative Example B

Comparative Example B was a conventional fuel cell anode for a proton exchange membrane (PEM) fuel cell and contained carbon-supported platinum catalyst and unsupported iridium oxide powder. The anode catalyst layer decal used in Comparative Example B was a coated catalyst ink. Catalyst 1, Catalyst 3, and PFSA Ionomer were mixed with solvent to form a 12 wt.% solids suspension. The ionomer to carbon weight ratio in the suspension was 4/5. The metal-to-carbon weight ratios were 1/1 (Pt/C) and 1.4/1 (i.e., 7/5) for ((Pt+Ir) /C). The solvent was a water - alcohol mixture, such as those described for the catalyst ink in Example 8 of U.S. patent application 2009-0169949. The catalyst ink was mixed by ball milling with 6 mm ceramic ZrO₂. beads (from Glen Mills Inc., Clifton, NJ) for 48 hours after combining all components. This catalyst ink solution was coated on a silicone-coated PET release liner film with a Mayer rod, then dried at 130°C for 10 minutes to form the anode catalyst layer decal. The silicone coated PET release liner film was removed after lamination to form the CCM, which was then assembled in the single cell fuel test station and tested as described above.

### Comparative Example C

Comparative Example C was a conventional fuel cell anode for a proton exchange membrane (PEM) fuel cell and contained carbon-supported platinum catalyst and did not contain iridium. The anode catalyst layer decal used in Comparative Example C was a coated catalyst ink. Catalyst 2 and PFSA Ionomer were mixed with solvent to provide a 12 wt.% solids suspension. The ionomer to carbon weight ratio in the suspension was 4/5. The metal-to-carbon weight ratio was 1/4 (Pt/C). The solvent was a water - alcohol mixture, such as those described for the electrode inks in Example 8 of U.S. patent application 2009-0169949. The ink was mixed by ball milling with 6 mm ceramic ZrO₂. beads for 48 hours after combining all components. This catalyst ink solution was coated on a silicone-coated PET release liner film with a notch bar coater, then dried at 130°C for 10 minutes to form the anode catalyst layer decal. The silicone coated PET release liner film was removed after lamination to form the CCM, which was then assembled in the single cell fuel test station and tested as described above.

### Preparatory Example A

An anode ink master batch was prepared by adding 10 grams of Carbon Black with 41.93 grams of PFSA Ionomer solution (19.1wt% solids with a balance of 60:40 n-propyl alcohol:water) and sufficient solvent to make a 15 wt.% solids suspension. The solvent consisted of three compounds, namely water, n-propyl alcohol, and t-butanol, in a ratio of 17 : 28.1 : 59.6. The ink master batch was mixed by ball milling with 6 mm ceramic ZrO₂. beads (Glen Mills Inc.) for 48 hours, then stored under nitrogen in a polyethylene bottle until used.

### Preparatory Example B

An anode ink master batch was prepared by adding 3 grams of Ungraphitized Carbon with 12.58 grams of PFSA Ionomer solution (19.1wt% solids with a balance of 60:40 n-propyl alcohol:water) and sufficient solvent to make an 8.0 wt.% solids suspension. The solvent consisted of three compounds, namely water, n-propyl alcohol, and t-butanol, in a ratio of 10.4 : 28.8 : 22.8. The ink master batch was mixed by ball milling with 6 mm ceramic ZrO₂. beads (Glen Mills Inc.) for 48 hours, then stored under nitrogen in a polyethylene bottle until used.

### Preparatory Example C

An anode ink master batch was prepared by adding 5 grams of Graphitized Carbon with 20.96 grams of PFSA Ionomer solution (19.1wt% solids with a balance of 60:40 n-propyl alcohol:water) and sufficient solvent to make a 15 wt.% solids suspension. The solvent consisted of three compounds, namely water, n-propyl alcohol, and t-butanol, in a ratio of 10.2 : 12.1 : 38.9. The ink master batch was mixed by ball milling with 6 mm ceramic ZrO₂. beads (Glen Mills Inc.) for 48 hours, then stored under nitrogen in a polyethylene bottle until used.

### Preparatory Example D

Acicular Particle 2 prepared as described in the section "Preparation of Nanostructured Thin Film (NSTF) Catalyst" above, were removed from the polyimide film with a small brush and collected for later use. These acicular particles had weight ratios of Pt : Ir : Perylene Red of 50:40:22.

### Preparatory Example E

Acicular Particle 3 prepared as described in the section "Preparation of Nanostructured Thin Film (NSTF) Catalyst" above, were removed from the polyimide film with a small brush and collected for later use. The Acicular Particle 3 had a lower loading relative to Preparatory Example D and provided a thinner catalyst coating on the Perylene Red, resulting in a higher surface area per unit mass of catalysts. These acicular particles had weight ratios of Pt : Ir : Perylene Red of 20:15:22.

### Example 1

The ink master batch of Preparatory Example A was combined with the supported catalyst particles of Preparatory Example E in amounts such that the weight ratio of precious metal (Pt + Ir) on the Perylene Red to the Carbon Black in the ink master batch was 3/2. The ratio of ionomer to carbon particles (Carbon Black) was 4/5. The resulting ink mixture was stirred with a magnetic stirring bar for 24 hours after combining all components. The ink was then coated on a release liner, with the coating layer wet thickness adjusted to provide a catalyst layer having a platinum loading of 0.052 mg/cm² (and a resulting Ir loading of 0.039 mg/cm², since the ratio of Pt/Ir on the whiskers was fixed at 4/3.) The ink was then dried to form an anode catalyst layer decal. The release liner was removed after lamination to form the CCM, which was then assembled in the single cell fuel test station and tested as described above.

### Example 2

Example 2 was prepared and tested as in Example 1, except that the ink coating thickness was adjusted such that the catalyst loading of the anode catalyst layer decal was 0.088 mg/cm² of Pt and 0.066 mg/cm² of Ir.

### Example 3

The ink master batch of Preparatory Example A was combined with the catalyst-bearing whiskers of Preparatory Example D in amounts such that the weight ratio of precious metal (Pt + Ir) on the Perylene Red to the Carbon Black in the ink master batch was 3/2. The ratio of ionomer to carbon (i.e., Carbon Black) was 4/5. The resulting ink mixture was stirred with a magnetic stirring bar for 24 hours after combining all components. The ink was then coated on a release liner, with the coating layer wet thickness adjusted to provide a catalyst layer having a platinum loading of 0.079 mg/cm² (and a resulting Ir loading of 0.063 mg/cm², since the ratio of Pt/Ir on the whiskers was fixed at 5/4.) The ink was then dried to form an anode catalyst layer decal. The release liner was removed after lamination to form the CCM, which was then assembled in the single cell fuel test station and tested as described above.

### Example 4

Example 4 was prepared and tested as in Example 1, except that the ink coating thickness was adjusted such that the catalyst loading of the anode catalyst layer decal was 0.043 mg/cm² of Pt and 0.032 mg/cm² of Ir.

### Example 5

The ink master batch of Preparatory Example B was combined with Preparatory Example D in amounts such that the weight ratio of precious metal (Pt + Ir) on the Perylene Red to the Ungraphitized Carbon in the ink master batch was 3/2. The ratio of ionomer to carbon particles (Ungraphitized Carbon) was 4/5. The resulting ink mixture was stirred with a magnetic stirring bar for 24 hours after combining all components. The ink was then coated on a release liner, with the coating layer wet thickness adjusted to provide a catalyst layer having a platinum loading of 0.101 mg/cm² (and a resulting Ir loading of 0.081 mg/cm², since the ratio of Pt/Ir on the whiskers was fixed at 5/4.) The ink was then dried to form an anode catalyst layer decal. The release liner was removed after lamination to form the CCM, which was then assembled in the single cell fuel test station and tested as described above.

### Example 6

The ink master batch of Preparatory Example C was combined with the supported catalyst of Preparatory Example D in amounts such that the weight ratio of precious metal (Pt + Ir) on the Perylene Red to the Graphitized Carbon in the ink master batch was 3/2. The ratio of ionomer to carbon particles (Graphitized Carbon) was 4/5. The resulting ink mixture was stirred with a magnetic stirring bar for 24 hours after combining all components. The ink was then coated on a release liner, with the coating layer wet thickness adjusted to provide a catalyst layer having a platinum loading of 0.151 mg/cm² (and a resulting Ir loading of 0.121 mg/cm², since the ratio of Pt/Ir on the whiskers was fixed at 5/4.) The ink was then dried to form an anode catalyst layer. The release liner was removed after lamination to form the CCM, which was then assembled in the single cell fuel test station and tested as described above.

### Example 7

The ink master batch of Preparatory Example A was combined with the supported catalyst of Preparatory Example D in amounts such that the weight ratio of precious metal (Pt + Ir) on the Perylene Red to the Carbon Black in the ink master batch was 3/2. The ratio of ionomer to carbon particles (Carbon Black) was 4/5. The resulting ink mixture was stirred with a magnetic stirring bar for 24 hours after combining all components. The ink was then coated on a release liner, with the coating layer wet thickness adjusted to provide a catalyst layer having a platinum loading of 0.154 mg/cm² (and a resulting Ir loading of 0.123 mg/cm², since the ratio of Pt/Ir on the Perylene Red was fixed at 5/4.) The ink was then dried to form an anode catalyst layer. The release liner was removed after lamination to form the CCM, which was then assembled in the single cell fuel test station and tested as described above.

### Example 8

The ink master batch of Preparatory Example A was combined with Pt-based Acicular Particle 4 and Ir-based Acicular Particle 5 in a Pt/Ir weight ratio of 10/3 in amounts such that the weight ratio of precious metal (Pt + Ir) on the Perlyene Red to the Carbon Black from the ink master batch was 3/2. The ratio of ionomer to carbon particles (Carbon Black) was 4/5. The resulting ink mixture was stirred with a magnetic stirring bar for 24 hours after combining all components. The ink was then coated on a release liner, with the coating layer wet thickness adjusted to provide a catalyst layer having a platinum loading of 0.083 mg/cm² and an Ir loading of 0.025 mg/cm², resulting in a ratio of Pt/Ir of 10/3. The ink was then dried to form an anode catalyst layer decal. The release liner was removed after lamination to form the CCM, which was then assembled in the single cell fuel test station and tested as described above.

Summarized in Table 1 below are the electrode areal loadings of Pt and Ir metals, the weight ratios of metal to carbon particles ((Pt + Ir)/C), and the weight ratios of ionomer to carbon particles (Ionomer/C) for the anode electrodes used in Comparative Examples A-C and Examples 1-8.

**Table 1**

| | Catalyst Loading mg Pt/cm² | Catalyst Loading mg Ir/cm² | Pt/Ir by weight | Source of elemental carbon (C) | (Pt+Ir)/C by weight | Ionomer/C by weight |
|---|---|---|---|---|---|---|
| Comp. Ex. A | 0.050 | 0.015 | 10/3 | No C | No C | No ionomer |
| Comp. Ex. B | 0.100 | 0.040 | 5/2 | Carbon support of Catalyst 1 | 7/5 | 4/5 |
| Comp. Ex. C | 0.050 | 0 | No Ir | Carbon support of Catalyst 2 | 1/4 | 4/5 |
| Example 1 | 0.052 | 0.039 | 4/3 | Carbon Black | 3/2 | 4/5 |
| Example 2 | 0.088 | 0.066 | 4/3 | Carbon Black | 3/2 | 4/5 |
| Example 3 | 0.079 | 0.063 | 5/4 | Carbon Black | 3/2 | 4/5 |
| Example 4 | 0.043 | 0.032 | 4/3 | Carbon Black | 3/2 | 4/5 |
| Example 5 | 0.101 | 0.081 | 5/4 | Ungraphitized Carbon | 3/2 | 4/5 |
| Example 6 | 0.151 | 0.121 | 5/4 | Graphitized Carbon | 3/2 | 4/5 |
| Example 7 | 0.154 | 0.123 | 5/4 | Carbon Black | 3/2 | 4/5 |
| Example 8 | 0.083 | 0.025 | 10/3 | Carbon Black | 3/2 | 4/5 |

Hydrogen sensitivity test results for Comparative Examples A-C and Examples 1-2 are shown in Fig. 1.

Galvanodynamic scan (GDS) polarization curves for Comparative Examples A-C and Examples 1-2 are shown in Fig. 2.

Results of cell output voltage versus amount of time spent in reversal mode for Comparative Examples A and B, and Examples 1, 2, 4, 5, and 8 are shown in Fig. 3. Fig. 4 compares the reversal tolerance of dispersed NSTF anodes containing three different types of carbon (Examples 5-7) to Comparative Example B. Shown in Table 2 below is the amount of cumulative time the test cell spent under reversal conditions until the performance of the test cell fell below 0.4 volts when run under 1.0 A/cm².

**Table 2**

| Sample | Cumulative Time under reversal until performance drops below 0.4V |
|---|---|
| Comp. Ex. A | 3000 sec |
| Comp. Ex. B | 3000 sec |
| Example 1 | 11520 sec |
| Example 2 | 28200 sec |
| Example 4 | 18680 sec |
| Example 5 | >33900 sec |
| Example 8 | 10200 sec |

| | |
|---|---|
| *Sample had not failed, but was removed from test. | |

Foreseeable modifications and alterations of this invention will be apparent to those skilled in the art without departing from the scope of this invention. This invention should not be restricted to the embodiments that are set forth in this application for illustrative purposes. To the extent that there is any conflict or discrepancy between this specification as written and the disclosure in any document mentioned herein, this specification as written will prevail.

## Claims

1. A composition comprising:
(a) a plurality of acicular particles, wherein the acicular particles comprise a microstructured core with a layer of catalytic material on at least one portion of the surface of the microstructured core, wherein the microstructured core comprises at least one of a polynuclear aromatic hydrocarbon and heterocyclic compounds, and the catalytic material comprises (i) platinum and (ii) at least one of iridium and ruthenium;
(b) ionomer binder;
(c) solvent; and
(d) a plurality of carbon particles,
wherein the plurality of acicular particles is not oriented.

2. The composition of claim 1, wherein the layer of catalytic material comprises at least one of (i) an alloy or intimate mixture of platinum, iridium, and X; (ii) an alloy or intimate mixture of platinum, ruthenium, and X; and (iii) an alloy or intimate mixture of platinum, iridium, ruthenium, and X, where X is at least one of nickel, cobalt, hafnium, titanium, zirconium and manganese.

3. The composition of claim 1, wherein the layer of catalytic material is a composite layer comprising a first layer which contains platinum and a second layer which contains at least one of iridium and ruthenium.

4. The composition of claim 3, further comprising a third layer disposed between the first and second layers, wherein the third layer comprises a refractory metal.

5. The composition of claim 4, wherein the refractory metal comprises at least one of a refractory metal, a refractory metal oxide, a refractory metal boride, a refractory metal carbide, a refractory metal nitride, and a refractory metal silicide.

6. A composition comprising:
(a) a plurality of acicular particles comprising first and second pluralities of acicular particles, wherein the first plurality of acicular particles comprise a first microstructured core with a first layer of catalytic material on at least one portion of the surface of the first microstructured core, wherein the first layer of catalytic material comprises platinum; and wherein the second plurality of acicular particles comprise a second microstructured core with a second layer of catalytic material on at least one portion of the surface of the second microstructured core, wherein the second layer of catalytic material comprises at least one of iridium and ruthenium and wherein the first and second microstructured cores independently comprise at least one of a polynuclear aromatic hydrocarbon and heterocyclic compounds;
(b) ionomer binder;
(c) solvent; and
(d) a plurality of carbon particles,
wherein the plurality of acicular particles is not oriented.

7. The composition of any one of the previous claims, wherein the layer of catalytic material comprises one or more thin films of catalytic material.

8. The composition of any one of the previous claims, wherein the layer of catalytic material comprises a nanostructured catalyst layer.

9. The composition of any one of the previous claims, wherein the weight ratio of platinum to the collective weight of iridium and/or ruthenium in the catalytic material is at least 1000:1 and at most 1:5.

10. The composition of any one of the previous claims, wherein the atomic ratio of the combined Pt, Ir, and Ru to the other transition metals in the catalytic material is at least 5:95 and at most 95:5.

11. The composition of any one of the previous claims, wherein the carbon particles have an average major axis of the particle of less than 250 nm.

12. The composition of any one of the previous claims, wherein the ionomer binder comprises at least one of perfluorosulfonimid-acid, imide, polyether sulfone, or combinations thereof.

13. An article comprising:
a substrate with a coating thereon, the coating comprising
(a) a plurality of acicular particles, wherein the acicular particles comprise a microstructured core with a layer of catalytic material on at least one portion of the surface of the microstructured core, wherein the microstructured core comprises at least one of a polynuclear aromatic hydrocarbon and heterocyclic compounds, and the catalytic material comprises (i) platinum and (ii) at least one of iridium and ruthenium;
(b) ionomer binder; and
(c) a plurality of carbon particles,
wherein the plurality of acicular particles is not oriented.

14. An article comprising:
a substrate with a coating thereon, the coating comprising
(a) a plurality of acicular particles comprising first and second pluralities of acicular particles, wherein the first plurality of acicular particles comprise a first microstructured core with a first layer of catalytic material on at least one portion of the surface of the first microstructured core, wherein the first layer of catalytic material comprises platinum; and wherein the second plurality of acicular particles comprise a second microstructured core with a second layer of catalytic material on at least one portion of the surface of the second microstructured core, wherein the second layer of catalytic material comprises at least one of iridium and ruthenium and wherein the first and second microstructured cores independently comprise at least one of a polynuclear aromatic hydrocarbon and heterocyclic compounds;
(b) ionomer binder; and
(c) a plurality of carbon particles,
wherein the plurality of acicular particles is not oriented.

15. A method of generating electricity comprising:
providing a fuel cell comprising an anode portion and a cathode portion and an ion conductive membrane there between, wherein the anode comprises the article of claim 13-14; and
adding hydrogen into the anode portion of the fuel cell.

## Patentansprüche

1. Eine Zusammensetzung, umfassend:
(a) eine Mehrzahl von nadelförmigen Teilchen, wobei die nadelförmigen Teilchen einen mikrostrukturierten Kern mit einer Schicht aus katalytischem Material auf mindestens einem Abschnitt der Oberfläche des mikrostrukturierten Kerns umfassen, wobei der mikrostrukturierte Kern mindestens eines von einem polynuklearen aromatischen Kohlenwasserstoff und heterocyclischen Verbindungen umfasst und das katalytische Material (i) Platin und (ii) mindestens eines von Iridium und Ruthenium umfasst;
(b) lonomerbindemittel;
(c) Lösungsmittel; und
(d) eine Mehrzahl von Kohlenstoffteilchen,
wobei die Mehrzahl von nadelförmigen Teilchen nicht ausgerichtet ist.

2. Die Zusammensetzung nach Anspruch 1, wobei die Schicht aus katalytischem Material mindestens eines von (i) einer Legierung oder innigen Mischung von Platin, Iridium und X; (ii) einer Legierung oder innigen Mischung von Platin, Ruthenium und X; und (iii) einer Legierung oder innigen Mischung von Platin, Iridium, Ruthenium und X umfasst, wobei X mindestens eines von Nickel, Kobalt, Hafnium, Titan, Zirkonium und Mangan ist.

3. Die Zusammensetzung nach Anspruch 1, wobei die Schicht aus katalytischem Material eine Verbundschicht ist, umfassend eine erste Schicht, die Platin enthält, und eine zweite Schicht, die mindestens eines von Iridium und Ruthenium enthält.

4. Die Zusammensetzung nach Anspruch 3, ferner umfassend eine dritte Schicht, die zwischen der ersten und der zweiten Schicht angeordnet ist, wobei die dritte Schicht ein hochschmelzendes Metall umfasst.

5. Die Zusammensetzung nach Anspruch 4, wobei das hochschmelzende Metall mindestens eines von einem hochschmelzenden Metall, einem hochschmelzenden Metalloxid, einem hochschmelzenden Metallborid, einem hochschmelzenden Metallcarbid, einem hochschmelzenden Metallnitrid und einem hochschmelzenden Metallsilicid umfasst.

6. Eine Zusammensetzung, umfassend:
(a) eine Mehrzahl von nadelförmigen Teilchen, umfassend eine erste und eine zweite Mehrzahl von nadelförmigen Teilchen, wobei die erste Mehrzahl von nadelförmigen Teilchen einen ersten mikrostrukturierten Kern mit einer ersten Schicht aus katalytischem Material auf mindestens einem Abschnitt der Oberfläche des ersten mikrostrukturierten Kerns umfassen, wobei die erste Schicht aus katalytischem Material Platin umfasst; und wobei die zweite Mehrzahl von nadelförmigen Teilchen einen zweiten mikrostrukturierten Kern mit einer zweiten Schicht aus katalytischem Material auf mindestens einem Abschnitt der Oberfläche des zweiten mikrostrukturierten Kerns umfassen, wobei die zweite Schicht aus katalytischem Material mindestens eines von Iridium und Ruthenium umfasst und wobei der erste und der zweite mikrostrukturierte Kern unabhängig mindestens eines von einem polynuklearen aromatischen Kohlenwasserstoff und heterocyclischen Verbindungen umfassen;
(b) lonomerbindemittel;
(c) Lösungsmittel; und
(d) eine Mehrzahl von Kohlenstoffteilchen, wobei die Mehrzahl von nadelförmigen Teilchen nicht ausgerichtet ist.

7. Die Zusammensetzung nach einem der vorstehenden Ansprüche, wobei die Schicht aus katalytischem Material eine oder mehrere dünne Folien aus katalytischem Material umfasst.

8. Die Zusammensetzung nach einem der vorstehenden Ansprüche, wobei die Schicht aus katalytischem Material eine nanostrukturierte Katalysatorschicht umfasst.

9. Die Zusammensetzung nach einem der vorstehenden Ansprüche, wobei das Gewichtsverhältnis von Platin zu dem gemeinsamen Gewicht von Iridium und/oder Ruthenium in dem katalytischen Material mindestens 1000:1 und höchstens 1:5 beträgt.

10. Die Zusammensetzung nach einem der vorstehenden Ansprüche, wobei das Atomverhältnis des kombinierten Pt, Ir und Ru zu den anderen Übergangsmetallen in dem katalytischen Material mindestens 5:95 und höchstens 95:5 beträgt.

11. Die Zusammensetzung nach einem der vorstehenden Ansprüche, wobei die Kohlenstoffteilchen eine durchschnittliche Hauptachse des Teilchens von weniger als 250 nm aufweisen.

12. Die Zusammensetzung nach einem der vorstehenden Ansprüche, wobei das lonomerbindemittel mindestens eines von Perfluorsulfonimidsäure, Imid, Polyethersulfon oder Kombinationen davon umfasst.

13. Ein Gegenstand, umfassend:
ein Substrat mit einer Beschichtung darauf, wobei die Beschichtung umfasst:
(a) eine Mehrzahl von nadelförmigen Teilchen, wobei die nadelförmigen Teilchen einen mikrostrukturierten Kern mit einer Schicht aus katalytischem Material auf mindestens einem Abschnitt der Oberfläche des mikrostrukturierten Kerns umfassen, wobei der mikrostrukturierte Kern mindestens eines von einem polynuklearen aromatischen Kohlenwasserstoff und heterocyclischen Verbindungen umfasst und das katalytische Material (i) Platin und (ii) mindestens eines von Iridium und Ruthenium umfasst;
(b) lonomerbindemittel; und
(c) eine Mehrzahl von Kohlenstoffteilchen,
wobei die Mehrzahl von nadelförmigen Teilchen nicht ausgerichtet ist.

14. Ein Gegenstand, umfassend:
ein Substrat mit einer Beschichtung darauf, wobei die Beschichtung umfasst:
(a) eine Mehrzahl von nadelförmigen Teilchen, umfassend eine erste und eine zweite Mehrzahl von nadelförmigen Teilchen, wobei die erste Mehrzahl von nadelförmigen Teilchen einen ersten mikrostrukturierten Kern mit einer ersten Schicht aus katalytischem Material auf mindestens einem Abschnitt der Oberfläche des ersten mikrostrukturierten Kerns umfassen, wobei die erste Schicht aus katalytischem Material Platin umfasst; und wobei die zweite Mehrzahl von nadelförmigen Teilchen einen zweiten mikrostrukturierten Kern mit einer zweiten Schicht aus katalytischem Material auf mindestens einem Abschnitt der Oberfläche des zweiten mikrostrukturierten Kerns umfassen, wobei die zweite Schicht aus katalytischem Material mindestens eines von Iridium und Ruthenium umfasst und wobei der erste und der zweite mikrostrukturierte Kern unabhängig mindestens eines von einem polynuklearen aromatischen Kohlenwasserstoff und heterocyclischen Verbindungen umfassen;
(b) lonomerbindemittel; und
(c) eine Mehrzahl von Kohlenstoffteilchen,
wobei die Mehrzahl von nadelförmigen Teilchen nicht ausgerichtet ist.

15. Ein Verfahren zum Erzeugen von Elektrizität, umfassend:
Bereitstellen einer Brennstoffzelle, die einen Anodenabschnitt und einen Kathodenabschnitt und eine ionenleitfähige Membran dazwischen umfasst, wobei die Anode den Gegenstand nach Anspruch 13 bis 14 umfasst; und
Hinzufügen von Wasserstoff in den Anodenabschnitt der Brennstoffzelle.

## Revendications

1. Composition comprenant :
(a) une pluralité de particules aciculaires, dans laquelle les particules aciculaires comprennent un noyau microstructuré avec une couche de matériau catalytique sur au moins une partie de la surface du noyau microstructuré, dans laquelle le noyau microstructuré comprend au moins l'un parmi un hydrocarbure aromatique polynucléaire et des composés hétérocycliques, et le matériau catalytique comprend (i) du platine et (ii) au moins l'un parmi iridium et ruthénium ;
(b) un liant ionomère ;
(c) du solvant ; et
(d) une pluralité de particules de carbone,
dans laquelle la pluralité de particules aciculaires n'est pas orientée.

2. Composition selon la revendication 1, dans laquelle la couche de matériau catalytique comprend au moins l'un parmi (i) un alliage ou mélange intime de platine, d'iridium, et de X ; (ii) un alliage ou mélange intime de platine, de ruthénium, et de X ; et (iii) un alliage ou mélange intime de platine, d'iridium, de ruthénium, et de X, où X est au moins l'un parmi nickel, cobalt, hafnium, titane, zirconium et manganèse.

3. Composition selon la revendication 1, dans laquelle la couche de matériau catalytique est une couche composite comprenant une première couche qui contient du platine et une deuxième couche qui contient au moins l'un parmi iridium et ruthénium.

4. Composition selon la revendication 3, comprenant en outre une troisième couche disposée entre les première et deuxième couches, dans laquelle la troisième couche comprend un métal réfractaire.

5. Composition selon la revendication 4, dans laquelle le métal réfractaire comprend au moins l'un parmi un métal réfractaire, un oxyde de métal réfractaire, un borure de métal réfractaire, un carbure de métal réfractaire, un nitrure de métal réfractaire, et un siliciure de métal réfractaire.

6. Composition comprenant :
(a) une pluralité de particules aciculaires comprenant des première et deuxième pluralités de particules aciculaires, dans laquelle la première pluralité de particules aciculaires comprennent un premier noyau microstructuré avec une première couche de matériau catalytique sur au moins une partie de la surface du premier noyau microstructuré, dans laquelle la première couche de matériau catalytique comprend du platine ; et dans laquelle la deuxième pluralité de particules aciculaires comprennent un deuxième noyau microstructuré avec une deuxième couche de matériau catalytique sur au moins une partie de la surface du deuxième noyau microstructuré, dans laquelle la deuxième couche de matériau catalytique comprend au moins l'un parmi iridium et ruthénium et dans laquelle les premier et deuxième noyaux microstructurés comprennent indépendamment au moins l'un parmi un hydrocarbure aromatique polynucléaire et des composés hétérocycliques ;
(b) un liant ionomère ;
(c) du solvant ; et
(d) une pluralité de particules de carbone, dans laquelle la pluralité de particules aciculaires n'est pas orientée.

7. Composition selon l'une quelconque des revendications précédentes, dans laquelle la couche de matériau catalytique comprend un ou plusieurs films minces de matériau catalytique.

8. Composition selon l'une quelconque des revendications précédentes, dans laquelle la couche de matériau catalytique comprend une couche de catalyseur nanostructurée.

9. Composition selon l'une quelconque des revendications précédentes, dans laquelle le rapport pondéral du platine au poids collectif d'iridium et/ou de ruthénium dans le matériau catalytique vaut au moins 1000:1 et au plus 1:5.

10. Composition selon l'une quelconque des revendications précédentes, dans laquelle le rapport atomique du Pt, de l'Ir et du Ru combinés aux autres métaux de transition dans le matériau catalytique vaut au moins 5:95 et au plus 95:5.

11. Composition selon l'une quelconque des revendications précédentes, dans laquelle les particules de carbone ont un axe principal moyen de la particule inférieur à 250 nm.

12. Composition selon l'une quelconque des revendications précédentes, dans laquelle le liant ionomère comprend au moins l'un parmi un perfluorosulfonimido-acide, un imide, une polyéther-sulfone, ou des combinaisons de ceux-ci.

13. Article comprenant :
un substrat avec un revêtement sur celui-ci, le revêtement comprenant
(a) une pluralité de particules aciculaires, dans lequel les particules aciculaires comprennent un noyau microstructuré avec une couche de matériau catalytique sur au moins une partie de la surface du noyau microstructuré, dans lequel le noyau microstructuré comprend au moins l'un parmi un hydrocarbure aromatique polynucléaire et des composés hétérocycliques, et le matériau catalytique comprend (i) du platine et (ii) au moins l'un parmi iridium et ruthénium ;
(b) un liant ionomère ; et
(c) une pluralité de particules de carbone,
dans lequel la pluralité de particules aciculaires n'est pas orientée.

14. Article comprenant :
un substrat avec un revêtement sur celui-ci, le revêtement comprenant
(a) une pluralité de particules aciculaires comprenant des première et deuxième pluralités de particules aciculaires, dans lequel la première pluralité de particules aciculaires comprennent un premier noyau microstructuré avec une première couche de matériau catalytique sur au moins une partie de la surface du premier noyau microstructuré, dans lequel la première couche de matériau catalytique comprend du platine ; et dans lequel la deuxième pluralité de particules aciculaires comprennent un deuxième noyau microstructuré avec une deuxième couche de matériau catalytique sur au moins une partie de la surface du deuxième noyau microstructuré, dans lequel la deuxième couche de matériau catalytique comprend au moins l'un parmi iridium et ruthénium et dans lequel les premier et deuxième noyaux microstructurés comprennent indépendamment au moins l'un parmi un hydrocarbure aromatique polynucléaire et des composés hétérocycliques ;
(b) un liant ionomère ; et
(c) une pluralité de particules de carbone,
dans lequel la pluralité de particules aciculaires n'est pas orientée.

15. Procédé de génération d'électricité comprenant :
la fourniture d'une pile à combustible comprenant une partie anode et une partie cathode et une membrane conductrice ionique entre elles, dans lequel l'anode comprend l'article de la revendication 13 ou 14 ; et
l'ajout d'hydrogène dans la partie anode de la pile à combustible.
